# FASCICULE DE BREVET EUROPEEN

(11) **EP 2 927 536 B1**
(45) Date de publication et mention de la délivrance du brevet: **05.08.2020**
(21) Numéro de dépôt: 15162423.6
(22) Date de dépôt: 02.04.2015
(51) Int. Cl.: F16H 25/20, E05F 15/603, E05F 15/622

(54) **ACTIONNEUR LINÉAIRE ET DISPOSITIF D'OCCULTATION ASSOCIÉ**
LINEARES STELLGLIED UND ENTSPRECHENDE ABDECKVORRICHTUNG
LINEAR ACTUATOR AND ASSOCIATED CONCEALMENT DEVICE

(30) Priorité: 04.04.2014 FR 1453012
(43) Date de publication de la demande: 07.10.2015
(73) Titulaire: SOMFY ACTIVITES SA, 74300 Cluses (FR)
(72) Inventeur: Chardon, Lilian, 31290 Vieillevigne (FR); Bontaz, Jeremy, 74350 Menthonnex en bornes (FR); Bonnaud, Matthieu, 74300 Cluses (FR)
(74) Mandataire: Bugnion Genève

(56) Documents cités:
- EP-A1- 1 503 019
- WO-A1-2009/007086

## Description

### DOMAINE TECHNIQUE DE L'INVENTION

La présente invention concerne un actionneur linéaire destiné à manœuvrer un écran obturant une ouverture réalisée dans un bâtiment, une enceinte ou une clôture, et notamment un écran battant tel qu'un volet, une porte, un portail, une grille, ou tout autre matériel équivalent. Elle concerne également un dispositif d'occultation comprenant un tel actionneur et un écran associé.

### ÉTAT DE LA TECHNIQUE ANTÉRIEURE

On connaît déjà le document FR 2 448 022 qui décrit un actionneur linéaire comprenant un moteur électrique, un réducteur, un système de transmission de mouvement, et un carter. Le carter comprend une première partie à l'intérieur de laquelle est disposé le moteur électrique, et une deuxième partie à l'intérieur de laquelle est disposé le système de transmission de mouvement. Le système de transmission de mouvement comprend un élément de déplacement relié à l'écran, en particulier un étrier. Le système de transmission de mouvement comprend une tige filetée et un écrou, la tige filetée étant entraînée en rotation par le moteur électrique et le réducteur, et l'écrou étant déplacé en translation sur la tige filetée. L'élément de déplacement est relié à l'écrou. La deuxième partie du carter forme un corps tubulaire comprenant un évidement longitudinal dans un plan inférieur. Et l'élément de déplacement est déplacé au travers de l'évidement longitudinal, lors de l'activation du moteur électrique entraînant en rotation la tige filetée puis en translation l'écrou.

En outre, un tel actionneur linéaire comprend un premier élément profilé constituant la première partie du carter et un deuxième élément profilé constituant la deuxième partie du carter. Et les premier et deuxième éléments profilés constituant respectivement les première et deuxième parties du carter sont fixés ensemble.

Cependant, cet actionneur linéaire présente l'inconvénient de réaliser les première et deuxième parties du carter avec deux éléments profilés distincts ne présentant aucune correspondance de forme. Il peut en résulter une certaine fragilité de l'actionneur linéaire au niveau de la zone de jonction entre les premier et deuxième éléments profilés constituant respectivement les première et deuxième parties du carter. Par ailleurs, un tel actionneur linéaire se présente sous la forme d'un boîtier composé de blocs reliés entre eux, qui n'ont pas les mêmes sections. Le stockage de l'actionneur linéaire avant son installation dans le bâtiment s'en trouve compliqué. On constate en outre que, une fois l'actionneur posé, la zone de jonction entre les deux parties du carter constitue une zone privilégiée d'infiltrations et/ou d'accumulation de poussières, qui s'avère difficile à nettoyer. Enfin, un tel assemblage est perçu comme étant ni robuste ni esthétique puisque le carter est construit par des blocs mis l'un derrière l'autre et fixés ensemble.

Dans le document EP 1 503 019 est décrit un actionneur linéaire destiné à manœuvrer un écran obturant une ouverture réalisée dans un bâtiment ou une enceinte, l'actionneur linéaire étant destiné à être relié d'une part à l'écran et d'autre part au bâtiment ou à l'enceinte, l'actionneur linéaire comprenant un moteur électrique, un système de transmission de mouvement, et un carter comprenant une partie inférieure et une partie supérieure formée chacune par une pièce allongée sensiblement profilée en U, les deux parties formant ensemble un logement à l'intérieur duquel est disposé le moteur électrique et le système de transmission de mouvement, les parties inférieure et supérieure du carter étant assemblées entre elles de sorte à former une liaison, qui n'est pas protégée et est visible.

Le document WO 2009/007086 A1 décrit un actionneur linéaire destiné à manœuvrer une porte coulissante. L'actionneur linéaire comprend un moteur électrique, un réducteur, un système de transmission de mouvement et un carter. Le système de transmission de mouvement comprend une tige filetée et un écrou. La tige filetée est entraînée en rotation par le moteur électrique. L'écrou est déplacé en translation sur la tige filetée. Le carter comprend une première partie, à l'intérieur de laquelle est disposé l'arbre de sortie du moteur électrique, et une deuxième partie, à l'intérieur de laquelle est disposé le corps du moteur électrique et le réducteur. Les première et deuxième parties du carter sont assemblées entre elles de sorte à former une liaison. La première partie du carter est insérée à l'intérieur du profilé d'assemblage et la deuxième partie du carter de l'actionneur linéaire présente un contour externe qui correspond au contour externe du profilé d'assemblage. Ainsi, la deuxième partie du carter est considérée comme la continuité du profilé d'assemblage.

### EXPOSÉ DE L'INVENTION

La présente invention a pour but de résoudre à faible coût tout ou partie des inconvénients précités. A cet effet, la présente invention vise, selon un premier aspect, un actionneur linéaire destiné à manœuvrer un écran obturant une ouverture réalisée dans un bâtiment ou une enceinte, l'actionneur linéaire étant destiné à être relié d'une part à l'écran et d'autre part au bâtiment ou à l'enceinte, l'actionneur linéaire comprenant au moins :
- un moteur électrique,
- un réducteur,
- un système de transmission de mouvement, le système de transmission de mouvement comprenant une tige filetée et un écrou, la tige filetée étant entraînée en rotation par le moteur électrique et le réducteur, et l'écrou étant déplacé en translation sur la tige filetée,
- un carter comprenant une première partie à l'intérieur de laquelle est disposé le moteur électrique, et une deuxième partie à l'intérieur de laquelle est disposé le système de transmission de mouvement, les première et deuxième parties du carter étant assemblées entre elles de sorte à former une liaison, le carter présentant un côté exposé correspondant à un côté externe de l'actionneur linéaire, le côté externe du carter étant le côté supérieur du carter en position assemblée de l'actionneur linéaire par rapport au dispositif d'occultation, et
- un élément commun à la première partie du carter et à la deuxième partie du carter, l'élément commun étant un élément de recouvrement recouvrant le côté supérieur de la deuxième partie du carter et au moins en partie le côté supérieur de la première partie du carter, de sorte à masquer la liaison entre les première et deuxième parties du carter, du côté supérieur du carter.

Ainsi, un tel actionneur linéaire formé au moyen des première et deuxième parties du carter comprend un élément commun constitué par l'élément de recouvrement recouvrant d'une part le côté exposé de la deuxième partie du carter et d'autre part au moins en partie le côté exposé de la première partie du carter.

Le recouvrement au moins en partie du côté exposé de la première partie du carter et du côté exposé de la deuxième partie du carter par l'élément de recouvrement assure une continuité de forme qui facilite le stockage, limite les accumulations de poussière, facilite le nettoyage, élimine les arêtes et permet d'améliorer la qualité perçue de l'actionneur linéaire, et en particulier de renvoyer une perception de robustesse par un aspect monobloc obtenu par l'utilisation de l'élément de recouvrement en tant que partie commune entre les première et deuxième parties du carter. A cet effet, l'élément de recouvrement présente de préférence une face extérieure exposée de profil uniforme, c'est-à-dire de section transversale constante dans une direction longitudinale.
De préférence, l'élément de recouvrement présente une section uniforme et est constitué par un profilé.

En outre, la répartition des efforts de la liaison entre les première et deuxième parties du carter de l'actionneur linéaire peut être améliorée au travers de l'élément de recouvrement recouvrant d'une part le côté exposé de la deuxième partie du carter et d'autre part au moins en partie le côté exposé de la première partie du carter.

Selon une caractéristique préférée d'un premier mode de réalisation de l'invention, la deuxième partie du carter comprend deux parois latérales et une paroi transversale s'étendant entre les deux parois latérales, où l'élément de recouvrement constitue la paroi transversale de la deuxième partie du carter. Ainsi, un tel actionneur linéaire formé au moyen des première et deuxième parties du carter comprend un élément commun constitué par la paroi transversale de la deuxième partie du carter. Le nombre de pièces s'en trouve minimisé et l'assemblage du carter facilité.

Préférentiellement, les parois transversale et latérales de la deuxième partie du carter sont assemblées entre elles par des moyens de guidage, constituant de préférence des liaisons glissières supprimant cinq degrés de liberté et ne permettant qu'une translation dans une direction de guidage. Ainsi, la deuxième partie du carter est constituée de trois parois distinctes reliées entre elles par des moyens de guidage de sorte à former un seul ensemble. De cette manière, la deuxième partie du carter est modulaire, et peut permettre d'assembler au travers des moyens de guidage les parois transversale et latérales pouvant être de dimensions différentes en fonction des modèles d'actionneurs. En outre, l'assemblage de la deuxième partie du carter est réalisé par coulissement des parois transversale et latérales entre elles le long des moyens de guidage dans la direction de guidage. Dans l'hypothèse où le système de transmission du mouvement comporte un arbre tournant autour d'un axe, par exemple une vis sans fin, on aura intérêt à ce que la direction de guidage soit parallèle à l'axe de l'arbre. D'une manière plus générale, la direction de guidage sera de préférence parallèle à la plus grande dimension du carter.

Par ailleurs, le coulissement de la paroi transversale par rapport aux parois latérales de la deuxième partie du carter au travers des moyens de guidage permet d'accéder depuis le dessus à l'espace défini par la deuxième partie du carter, en particulier lors d'une opération d'installation ou de maintenance de l'actionneur linéaire, de sorte à faciliter les manipulations de l'intervenant. De cette manière, le coulissement de la paroi transversale par rapport aux parois latérales de la deuxième partie du carter au travers des moyens de guidage permet d'accéder au système de transmission de mouvement, et éventuellement à au moins un capteur et/ou à au moins une butée mécanique disposés à l'intérieur de la deuxième partie du carter.

Avantageusement, les moyens de guidage des parois transversale et latérales de la deuxième partie du carter comprennent des éléments de liaison formant des nervures et des gorges ayant des profils conjugués, de préférence en queue d'aronde. Ce type de liaison contribue à la rigidité du carter.

Selon une caractéristique préférée d'un deuxième mode de réalisation de l'invention, l'élément de recouvrement est réalisé par une paroi distincte des première et deuxième parties du carter. Ainsi, un tel actionneur linéaire formé au moyen des première et deuxième parties du carter comprend en outre un élément commun constitué par une paroi distincte formant l'élément de recouvrement.

Avantageusement, une face transversale de la deuxième partie du carter comprend un évidement longitudinal. Ainsi, suite au retrait de l'élément de recouvrement, l'évidement longitudinal de la face transversale de la deuxième partie du carter permet d'accéder depuis le dessus à l'espace défini par la deuxième partie du carter, en particulier lors d'une opération d'installation ou de maintenance de l'actionneur linéaire, de sorte à faciliter les manipulations de l'intervenant.

Préférentiellement, l'élément de recouvrement et la deuxième partie du carter sont assemblés entre eux par des moyens de guidage, de sorte à former un ensemble solidaire, les moyens de guidage constituant de préférence des liaisons glissières supprimant cinq degrés de liberté et ne permettant qu'une translation dans une direction de guidage. L'assemblage de l'élément de recouvrement et de la deuxième partie du carter peut ainsi être réalisé par coulissement entre l'élément de recouvrement et la deuxième partie du carter le long des moyens de guidage. Par ailleurs, le coulissement de l'élément de recouvrement par rapport à la deuxième partie du carter au travers des moyens de guidage permet de pouvoir accéder depuis le dessus à l'espace défini entre l'élément de recouvrement et la deuxième partie du carter, et éventuellement à l'espace défini par la deuxième partie du carter au moyen de l'évidement longitudinal ménagé dans la face transversale de la deuxième partie du carter, en particulier lors d'une opération d'installation ou de maintenance de l'actionneur linéaire, de sorte à faciliter les manipulations de l'intervenant. De cette manière, le coulissement de l'élément de recouvrement par rapport à la deuxième partie du carter au travers des moyens de guidage permet de pouvoir accéder au système de transmission de mouvement au travers de l'évidement longitudinal ménagé dans la face transversale de la deuxième partie du carter.

En outre, le coulissement de l'élément de recouvrement par rapport à la deuxième partie du carter au travers des moyens de guidage permet d'accéder à au moins un capteur et/ou à au moins une butée mécanique disposés entre l'élément de recouvrement et la deuxième partie du carter, et éventuellement à l'intérieur de la deuxième partie du carter au travers de l'évidement longitudinal ménagé dans la face transversale de la deuxième partie du carter.

Avantageusement, les moyens de guidage de l'élément de recouvrement et de la deuxième partie du carter comprennent des éléments de liaison formant des nervures et des gorges ayant des profils conjugués, de préférence en queue d'aronde. Ce type de liaison contribue à la rigidité du carter.

Selon une autre caractéristique préférée de l'invention, l'élément de recouvrement comprend des moyens de guidage coopérant avec des moyens de guidage de la première partie du carter. Ainsi, la perception de robustesse par un aspect monobloc entre les première et deuxième parties du carter de l'actionneur linéaire est également garantie par les moyens de guidage de l'élément de recouvrement coopérant avec les moyens de guidage de la première partie du carter.

Avantageusement, les moyens de guidage de l'élément de recouvrement et de la première partie du carter sont des éléments de liaison par coulissement.

Selon une autre caractéristique préférée de l'invention, la deuxième partie du carter est reliée à la première partie du carter au moyen d'un élément de jonction, l'élément de recouvrement coopérant avec des moyens de guidage de l'élément de jonction.

Avantageusement, une extrémité de la deuxième partie du carter, opposée à la première partie du carter, est obturée par un bouchon.

Préférentiellement, le bouchon obturant l'extrémité de la deuxième partie du carter supporte un palier coopérant avec le système de transmission de mouvement.

Avantageusement, une extrémité de la première partie du carter, opposée à la deuxième partie du carter, est obturée par un embout.

Selon un deuxième aspect, l'invention concerne un dispositif d'occultation comprenant au moins un écran pouvant être déplacé autour d'un axe de rotation et entraîné en rotation par un actionneur linéaire conforme à l'invention.

Ce dispositif d'occultation présente des caractéristiques et avantages analogues à ceux décrits précédemment en relation avec l'actionneur linéaire selon l'invention.

### BRÈVE DESCRIPTION DES FIGURES

D'autres particularités et avantages de l'invention apparaîtront encore dans la description ci-après, en référence aux dessins annexés, donnés à titre d'exemples non limitatifs :
- la figure 1 est une vue schématique de dessus d'un dispositif d'occultation conforme à un mode de réalisation de l'invention ;
- la figure 2 est une vue en perspective d'un actionneur linéaire conforme à un premier mode de réalisation de l'invention pour un dispositif d'occultation tel qu'illustré à la figure 1 ;
- la figure 3 est une vue de face de l'actionneur linéaire illustré à la figure 2 ;
- la figure 4 est une vue en coupe de la figure 3 selon un plan de coupe longitudinal non représenté passant par un axe de rotation d'un système de transmission de mouvement de l'actionneur linéaire ;
- la figure 5 est une vue en coupe de la figure 4 selon le plan de coupe V-V ;
- la figure 6 est une vue en coupe de la figure 4 selon le plan de coupe VI-VI ;
- la figure 7 est une vue éclatée de l'actionneur linéaire illustré à la figure 2 ;
- la figure 8 est une vue de détail VIII de la figure 4 ;
- la figure 9 est une vue de détail IX de la figure 4 ;
- la figure 10 est une vue éclatée d'un actionneur linéaire conforme à un deuxième mode de réalisation de l'invention pour un dispositif d'occultation tel qu'illustré à la figure 1 ;
- la figure 11 est une vue de face de l'actionneur linéaire illustré à la figure 10 ; et
- la figure 12 est une vue en coupe de la figure 11 selon le plan de coupe XII-XII.

### DESCRIPTION DÉTAILLÉE DE MODES DE RÉALISATION

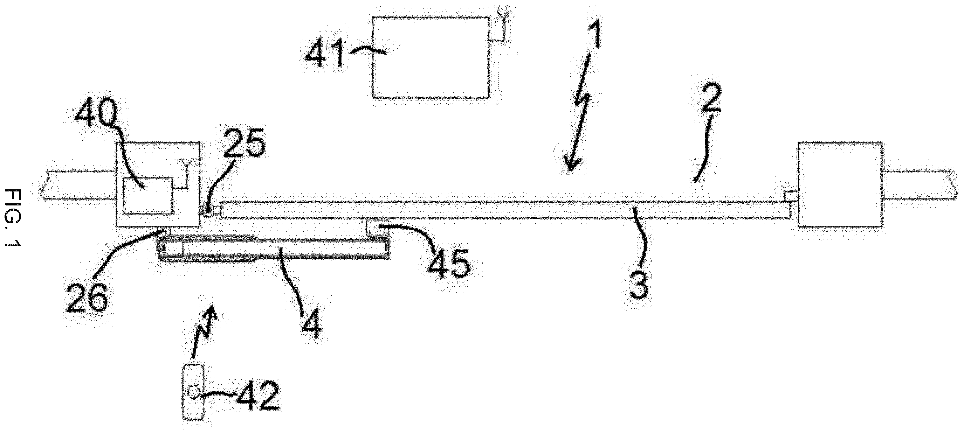

On va décrire tout d'abord, en référence à la figure 1, un dispositif d'occultation conforme à l'invention. Le dispositif d'occultation 1 est installé au niveau d'une ouverture 2 réalisée dans un bâtiment ou une enceinte. Le dispositif d'occultation 1 comprend au moins un écran battant 3 oscillant autour d'un axe de rotation 25 théoriquement sensiblement vertical et étant perpendiculaire au plan de la figure 1. Le dispositif d'occultation 1 comprend un dispositif d'entraînement motorisé mettant en mouvement l'écran 3 entre au moins une première position et une deuxième position. Le dispositif d'entraînement motorisé comprend un actionneur linéaire 4 électromécanique de l'écran 3.

Dans ce mode de réalisation, l'écran 3 est un élément mobile de fermeture ou d'occultation tel qu'un volet, une porte, un portail, une grille, ou tout autre matériel équivalent, mais bien entendu, la présente invention s'applique à tous les types de dispositif d'occultation ayant au moins un écran battant. L'écran 3 permet d'obturer l'ouverture 2 réalisée dans un bâtiment ou une enceinte, tels qu'une habitation ou une clôture.

L'actionneur linéaire 4 comprend une première partie reliée à l'écran 3 et une deuxième partie reliée au bâtiment ou à l'enceinte. L'extrémité arrière de l'actionneur linéaire 4 est articulée sur un support fixe 26 du bâtiment ou de l'enceinte de manière à osciller autour d'un axe transversal sensiblement parallèle à l'axe de rotation 25 de l'écran 3 et proche de celui-ci. L'écran 3 du dispositif d'occultation 1 est entraîné par l'actionneur linéaire 4 et mobile entre une position ouverte et une position fermée.

L'actionneur linéaire 4 est commandé par une unité de commande. L'unité de commande peut être par exemple une unité de commande locale 40, qui peut être reliée en liaison filaire ou non filaire avec une unité de commande centrale 41. L'unité de commande centrale 41 pilote l'unité de commande locale 40, et le cas échéant d'autres unités de commande locales similaires et réparties dans le bâtiment. L'unité de commande centrale 41 peut être en communication avec une station météorologique déportée à l'extérieur du bâtiment, incluant notamment un ou plusieurs capteurs pouvant être configurés à déterminer par exemple une température, une luminosité, ou encore une vitesse de vent. Une télécommande 42, pouvant être un type d'unité de commande locale, et pourvue d'un clavier de commande, qui comprend des moyens de sélection et d'affichage, permet en outre à un utilisateur d'intervenir sur l'actionneur linéaire 4 et/ou l'unité de commande centrale 41.

L'actionneur linéaire 4 est de préférence configuré pour exécuter les commandes d'ouverture ou de fermeture de l'écran 3 du dispositif d'occultation 1, pouvant être émises notamment par la télécommande 42. Des moyens de commande de l'actionneur linéaire 4 conforme à l'invention permettant le déplacement de l'écran 3 du dispositif d'occultation 1 sont constitués par au moins une unité électronique de contrôle 43. Cette unité électronique de contrôle 43 est apte à mettre en fonctionnement un moteur électrique 5 de l'actionneur linéaire 4, et en particulier permettre l'alimentation en énergie électrique du moteur électrique 5. Ainsi, l'unité électronique de contrôle 43 commande notamment le moteur électrique 5, de sorte à ouvrir ou fermer l'écran 3, comme décrit précédemment. L'unité électronique de contrôle 43 comprend également un module de réception d'ordres, en particulier d'ordres radioélectriques émis par un émetteur d'ordres tel que la télécommande 42 destinée à commander l'actionneur linéaire 4. Bien entendu, le module de réception d'ordres peut également permettre la réception d'ordres transmis par des moyens filaires.

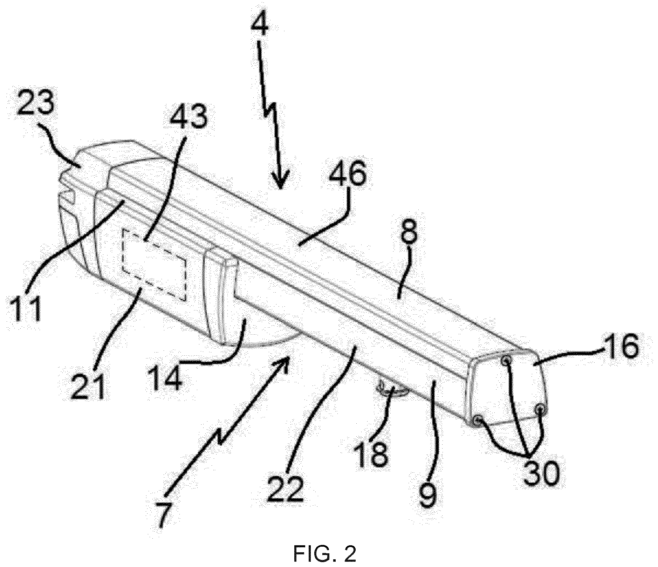

Ici, et tel qu'illustré à la figure 2, l'unité électronique de contrôle 43 est disposée à l'intérieur d'un carter 7 de l'actionneur linéaire 4.

Les moyens de commande de l'actionneur linéaire 4 comprennent des moyens matériels et/ou logiciels. A titre d'exemple nullement limitatif, les moyens matériels peuvent comprendre au moins un microcontrôleur.

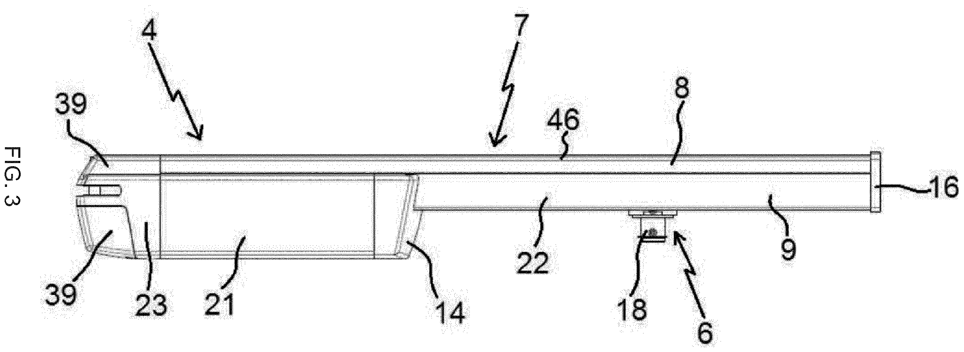

On va décrire à présent, en référence aux figures 2 à 12, un actionneur linéaire conforme à l'invention. L'actionneur linéaire 4 comprend au moins un moteur électrique 5, un système de transmission de mouvement 6, et un carter 7. L'actionneur linéaire 4 comprend en outre un réducteur 36. Le réducteur 36 est monté entre le moteur électrique 5 et le système de transmission de mouvement 6. Le moteur électrique 5 est configuré pour entraîner en rotation de manière réversible le système de transmission de mouvement 6, c'est-à-dire dans un sens de rotation horaire et dans un sens de rotation antihoraire.

Ici, le système de transmission de mouvement 6 comprend un élément de déplacement 18 relié à l'écran 3. Le système de transmission de mouvement 6 comprend une tige filetée 19 et un écrou 20, la tige filetée 19 étant entraînée en rotation par le moteur électrique 5 et le réducteur 36, et l'écrou 20 étant déplacé en translation sur la tige filetée 19. L'élément de déplacement 18 est relié à l'écrou 20. La tige filetée 19 est montée en rotation à l'intérieur du carter 7 autour d'un axe de rotation X. La tige filetée 19 est supportée par au moins un palier 17, et en particulier par deux paliers 17, 35.

Le carter 7 comprend une première partie 21 formant un premier logement à l'intérieur duquel est disposé le moteur électrique 5, et une deuxième partie 22 formant un deuxième logement disjoint du premier logement et à l'intérieur duquel est disposé le système de transmission de mouvement 6. Ici, le moteur électrique 5 est fixé dans la première partie 21 du carter 7. La tige filetée 19 du système de transmission de mouvement 6 est stationnaire suivant la direction axiale dans le carter 7, et en particulier dans la deuxième partie 22 de celui-ci. Ainsi, la tige filetée 19 est protégée à l'intérieur de la deuxième partie 22 du carter 7. De cette manière, seul l'écrou 20 est déplacé le long de la tige filetée 19 et à l'intérieur de la deuxième partie 22 du carter 7. L'écrou 20 est déplacé sur la tige filetée 19 en fonction du sens d'entraînement en rotation du moteur électrique 5. L'écrou 20 est déplacé en translation sur la tige filetée 19.

Dans un mode de réalisation, l'élément de déplacement 18 est logé dans un alésage ménagé dans une patte de fixation 45 reliée à l'écran 3, cette liaison empêchant l'entraînement en rotation de l'écrou 20 autour de l'axe de la tige filetée 19. Ici et de manière nullement limitative, la patte de fixation 45 est fixée à l'écran 3 au moyen de vis de fixation.

Lorsque la tige filetée 19 est entraînée en rotation dans un premier sens de rotation, par exemple horaire, par le moteur électrique 5, l'écrou 20 est déplacé, par exemple de l'extrémité libre de la deuxième partie 22 du carter 7 vers la première partie 21 du carter 7 de sorte à exercer une traction sur l'écran 3, et par conséquent d'ouvrir l'écran 3. Lorsque la tige filetée 19 est entraînée en rotation dans un deuxième sens de rotation, c'est-à-dire en sens inverse, par exemple antihoraire, l'écrou 20 est déplacé de la première partie 21 du carter 7 vers l'extrémité libre de la deuxième partie 22 du carter 7 de sorte à exercer une poussée sur l'écran 3, et par conséquent de fermer l'écran 3.

Le carter 7 présente un côté exposé, que l'on dira dans la suite supérieur. Le côté exposé du carter 7 correspond au côté externe de l'actionneur linéaire 4, ou autrement dit au côté faisant face aux intempéries et au soleil. Le côté externe du carter 7 est le côté supérieur de celui-ci en position assemblée de l'actionneur linéaire 4 par rapport au dispositif d'occultation 1.

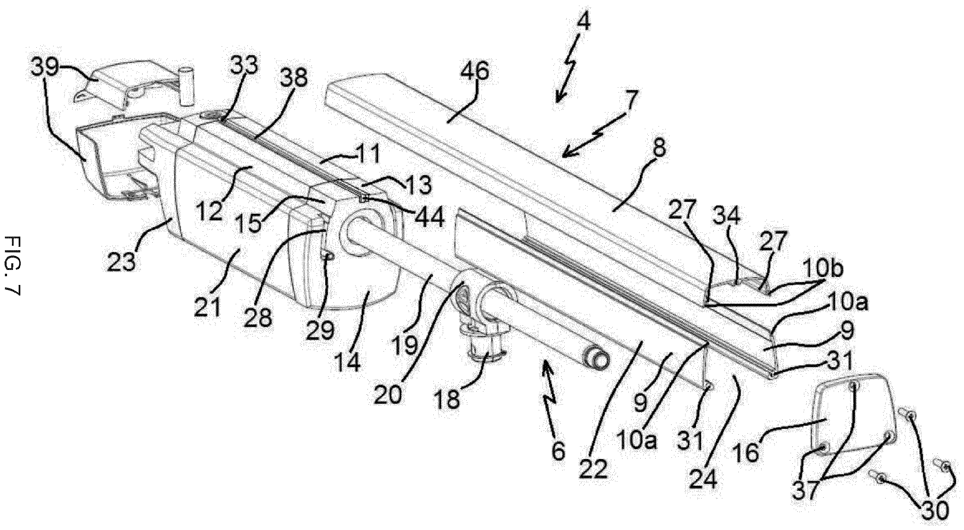

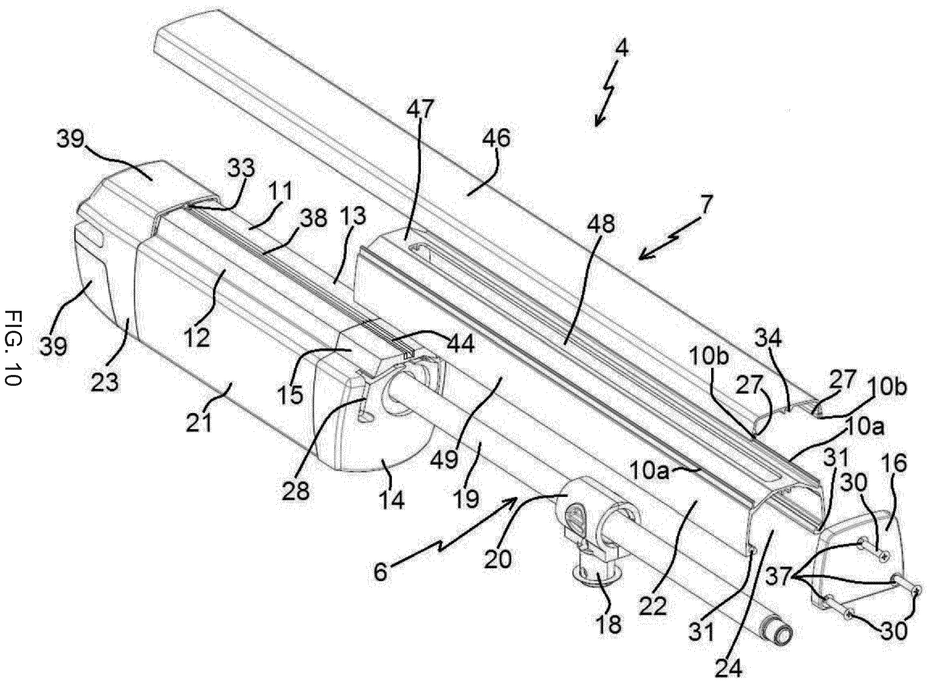

Avantageusement, la première partie 21 du carter 7 est réalisée en matériau métallique, et préférentiellement en aluminium. Ici, la première partie 21 du carter 7 est un élément profilé. Ici, et tel qu'illustré aux figures 7 et 10, la face supérieure 11 de la première partie 21 du carter 7 est une face pleine. Ainsi, la première partie 21 du carter 7 est un ensemble monobloc reliant quatre faces, supérieure, latérales et inférieure, de sorte à garantir la rigidité de celle-ci.

Dans un autre mode de réalisation non illustré, la face supérieure 11 de la première partie 21 du carter 7 comprend un évidement.

Ici, la deuxième partie 22 du carter 7 est dépourvue de paroi inférieure. Le plan inférieur de la deuxième partie 22 du carter 7 comprend l'évidement longitudinal 24.

Dans un autre mode de réalisation non représenté, la deuxième partie 22 du carter 7 peut comprendre également une paroi inférieure à l'intérieur de laquelle est ménagé l'évidement longitudinal 24.

Un élément de recouvrement 46 recouvre un côté supérieur de la deuxième partie 22 du carter 7 et au moins en partie un côté supérieur de la première partie 21 du carter 7, du côté exposé du carter 7. Ainsi, un tel actionneur linéaire 4 formé au moyen des première et deuxième parties 21, 22 du carter 7 comprend un élément commun constitué par l'élément de recouvrement 46 recouvrant d'une part le côté supérieur de la deuxième partie 22 du carter 7 et d'autre part au moins en partie le côté supérieur de la première partie 21 du carter 7. De cette manière, le recouvrement au moins en partie du côté supérieur de la première partie 21 du carter 7 et du côté supérieur de la deuxième partie 22 du carter 7 par l'élément de recouvrement 46 permet d'améliorer la qualité perçue de l'actionneur linéaire 4, et en particulier de renvoyer une perception de robustesse par un aspect monobloc obtenu par l'utilisation de l'élément de recouvrement 46 en tant que partie commune entre les première et deuxième parties 21, 22 du carter 7.

En outre, la répartition des efforts de la liaison entre les première et deuxième parties 21, 22 du carter 7 de l'actionneur linéaire 4 peut être améliorée au travers de l'élément de recouvrement 46 recouvrant d'une part le côté supérieur de la deuxième partie 22 du carter 7 et d'autre part au moins en partie le côté supérieur de la première partie 21 du carter 7.

On va décrire à présent, en référence aux figures 2 à 9, un premier mode de réalisation de l'invention.

La deuxième partie 22 du carter 7 comprend une paroi supérieure 8 et deux parois latérales 9. Avantageusement, les parois supérieure 8 et latérales 9 de la deuxième partie 22 du carter 7 sont des éléments réalisés en matériau métallique, et préférentiellement en aluminium. La deuxième partie 22 du carter 7 constituée des parois supérieure 8 et latérales 9 forme un U renversé, en position assemblée de l'actionneur linéaire 4 par rapport au dispositif d'occultation 1. Dans un tel mode de réalisation, la paroi supérieure 8 de la deuxième partie 22 du carter 7 forme une paroi de fond.

L'élément de recouvrement 46 est réalisé par la paroi supérieure 8 de la deuxième partie 22 du carter 7. Ici, la paroi supérieure 8 de la deuxième partie 22 du carter 7 recouvre au moins en partie une face supérieure 11 de la première partie 21 du carter 7. Ainsi, l'actionneur linéaire 4 formé au moyen des première et deuxième parties 21, 22 du carter 7 comprend un élément commun à ces deux parties 21, 22 constitué par la paroi supérieure 8 de la deuxième partie 22 du carter 7. De cette manière, le recouvrement au moins en partie de la face supérieure 11 de la première partie 21 du carter 7 par la paroi supérieure 8 de la deuxième partie 22 du carter 7 permet d'améliorer la qualité perçue de l'actionneur linéaire 4, et en particulier de renvoyer une perception de robustesse par un aspect monobloc obtenu par l'utilisation de la paroi supérieure 8 de la deuxième partie 22 du carter 7 en tant que partie commune entre les première et deuxième parties 21, 22 du carter 7. Le recouvrement au moins en partie de la face supérieure 11 de la première partie 21 du carter 7 par la paroi supérieure 8 de la deuxième partie 22 du carter 7 permet également de masquer la liaison entre les première et deuxième parties 21, 22 du carter 7. En outre, la répartition des efforts de la liaison entre les première et deuxième parties 21, 22 du carter 7 de l'actionneur linéaire 4 peut être améliorée au travers de la paroi supérieure 8 de la deuxième partie 22 du carter 7 recouvrant au moins en partie la face supérieure 11 de la première partie 21 du carter 7.

Ici, et tel qu'illustré aux figures 2 à 4, la paroi supérieure 8 de la deuxième partie 22 du carter 7 recouvre intégralement la face supérieure 11 de la première partie 21 du carter 7. Ainsi, le recouvrement complet de la face supérieure 11 de la première partie 21 du carter 7 par la paroi supérieure 8 de la deuxième partie 22 du carter 7 permet d'améliorer encore plus efficacement la qualité perçue de l'actionneur linéaire 4, et en particulier de renvoyer la perception de robustesse par un aspect monobloc sur toute la longueur du carter 7 comprenant les première et deuxième parties 21, 22.

Avantageusement, les parois latérales 9 de la deuxième partie 22 du carter 7 sont identiques. Ainsi, le coût d'obtention de l'actionneur linéaire 4 est minimisé puisque les parois latérales 9 de la deuxième partie 22 du carter 7 sont identiques, et par conséquent réversibles. En outre, la réalisation des parois latérales 9 de la deuxième partie 22 du carter 7 est mise en oeuvre avec le même outillage de sorte à minimiser les coûts d'investissement.

Préférentiellement, les parois supérieure 8 et latérales 9 de la deuxième partie 22 du carter 7 sont assemblées entre elles par des moyens de guidage 10. Ainsi, la deuxième partie 22 du carter 7 est constituée de trois parois 8, 9 distinctes reliées entre elles par des moyens de guidage 10 de sorte à former un seul ensemble. De cette manière, la deuxième partie 22 du carter 7 est modulaire, et peut permettre d'assembler au travers des moyens de guidage 10 les parois supérieure 8 et latérales 9 pouvant être de dimensions différentes en fonction des modèles d'actionneurs 4.

Dans un cas, la paroi supérieure 8 de la deuxième partie 22 du carter 7 peut être de longueur plus ou moins grande en fonction de la longueur de la première partie 21 du carter 7, tout en maintenant les parois latérales 9 de la deuxième partie 22 du carter 7 avec des dimensions identiques pour plusieurs modèles d'actionneurs 4.

Dans un autre cas, la paroi supérieure 8 de la deuxième partie 22 du carter 7 peut être de longueur plus ou moins grande en fonction de la longueur du système de transmission de mouvement 6 pour plusieurs modèles d'actionneurs 4, et par conséquent de la deuxième partie 22 du carter 7. La longueur des parois latérales 9 de la deuxième partie 22 du carter 7 est ajustée en fonction de la longueur de la paroi supérieure 8 de la deuxième partie 22 du carter 7. Bien entendu, dans un tel cas, la longueur de la première partie 21 du carter 7 peut être identique ou différente en fonction des modèles d'actionneurs 4.

En outre, l'assemblage de la deuxième partie 22 du carter 7 est réalisé par coulissement des parois supérieure 8 et latérales 9 entre elles le long des moyens de guidage 10. Par ailleurs, le coulissement de la paroi supérieure 8 par rapport aux parois latérales 9 de la deuxième partie 22 du carter 7 au travers des moyens de guidage 10 permet de pouvoir accéder depuis le dessus à l'espace défini par la deuxième partie 22 du carter 7, en particulier lors d'une opération d'installation ou de maintenance de l'actionneur linéaire 4, de sorte à faciliter les manipulations de l'intervenant, en particulier sans avoir à démonter les parois latérales 9 de la deuxième partie 22 du carter 7. De cette manière, le coulissement de la paroi supérieure 8 par rapport aux parois latérales 9 de la deuxième partie 22 du carter 7 au travers des moyens de guidage 10 permet de pouvoir accéder au système de transmission de mouvement 6, et éventuellement à au moins un capteur (non représenté) et/ou à au moins une butée mécanique (non représentée) disposés à l'intérieur de la deuxième partie 22 du carter 7.

Ici, et tel qu'illustré aux figures 2 à 4 et 7, les parois supérieure 8 et latérales 9 de la deuxième partie 22 du carter 7 forment un corps creux comprenant un évidement longitudinal 24 dans un plan inférieur de la deuxième partie 22 du carter 7. L'élément de déplacement 18 est déplacé au travers de l'évidement longitudinal 24 lors de l'activation du moteur électrique 12.

Avantageusement, les moyens de guidage 10 des parois supérieure 8 et latérales 9 de la deuxième partie 22 du carter 7 sont des éléments de liaison formant des nervures 10a et des gorges 10b de formes conjuguées, c'est-à-dire des éléments en saillie de l'une des parois et s'emboîtant par coulissement, dans des éléments en retrait correspondants d'une autre des parois. Ici, les parois latérales 9 de la deuxième partie 22 du carter 7 comportent une nervure 10a à leur extrémité supérieure et la paroi supérieure 8 de la deuxième partie 22 du carter 7 comporte une gorge 10b à chacune de ses deux extrémités de sorte que les gorges 10b de la deuxième partie 22 du carter 7 s'engagent respectivement par coulissement dans la nervure 10a de chaque paroi latérale 9 de la deuxième partie 22 du carter 7. Ainsi, l'assemblage de la deuxième partie 22 du carter 7 est réalisé par coulissement des parois supérieure 8 et latérales 9 entre elles le long des éléments de liaison formant des nervures 10a et des gorges 10b de formes conjuguées. De cette manière, l'assemblage de la deuxième partie 22 du carter 7 est peu onéreux, simple et rapide à mettre en œuvre lors de la fabrication de l'actionneur linéaire 4, et sans avoir recours à un outillage spécifique.

En outre, de tels moyens de guidage 10 permettent de garantir l'esthétique de l'actionneur linéaire 4 puisque ceux-ci sont invisibles suite à l'assemblage de la deuxième partie 22 du carter 7.

Ici, et tel qu'illustré à la figure 7, les nervures 10a sont réalisées respectivement par un élément en saillie de forme longitudinale, et en particulier rectiligne ou courbée. Et les gorges 10b associées correspondent respectivement à un élément en creux de même forme. Dans un autre mode de réalisation, les nervures 10a sont réalisées respectivement par un élément en saillie en forme de queue d'aronde, c'est-à-dire de forme trapézoïdale. Et les gorges 10b associées correspondent respectivement à un élément en creux de même forme. Ainsi, la forme en queue d'aronde des nervures 10a et des gorges 10b permet d'éviter une désolidarisation des parois supérieure 8 et latérales 9 de la deuxième partie 22 du carter 7 suite à leur assemblage entre elles par coulissement.

Préférentiellement, l'élément de recouvrement 46, étant réalisé par la paroi supérieure 8 de la deuxième partie 22 du carter 7, comprend des moyens de guidage 27 coopérant avec des moyens de guidage 12 de la première partie 21 du carter 7.

Ainsi, la perception de robustesse par un aspect monobloc entre les première et deuxième parties 21, 22 du carter 7 de l'actionneur linéaire 4 est également garantie par les moyens de guidage 27 de la paroi supérieure 8 de la deuxième partie 22 du carter 7 coopérant avec les moyens de guidage 12 de la première partie 21 du carter 7.

Avantageusement, les moyens de guidage 12, 27 de la paroi supérieure 8 de la deuxième partie 22 du carter 7 et de la première partie 21 du carter 7 sont des éléments de liaison par coulissement. Ainsi, l'assemblage de la paroi supérieure 8 de la deuxième partie 22 du carter 7 avec la première partie 21 du carter 7 est réalisé par coulissement de la paroi supérieure 8 de la deuxième partie 22 du carter 7 par rapport à la première partie 21 du carter 7, et en particulier par rapport à des flancs de guidage 12 de la face supérieure 11 de la première partie 21 du carter 7.

De cette manière, l'assemblage de la paroi supérieure 8 de la deuxième partie 22 du carter 7 avec la première partie 21 du carter 7 est peu onéreux, simple et rapide à mettre en oeuvre lors de la fabrication de l'actionneur linéaire 4, et sans avoir recours à un outillage spécifique. En outre, de tels moyens de guidage 12, 27 permettent de garantir l'esthétique de l'actionneur linéaire 4 puisque ceux-ci sont invisibles suite à l'assemblage de la paroi supérieure 8 de la deuxième partie 22 du carter 7 avec la première partie 21 du carter 7.

Les éléments de guidage 12, 27 reliant la paroi supérieure 8 de la deuxième partie 22 du carter 7 à la première partie 21 du carter 7, et en particulier les flancs de guidage 27 de la paroi supérieure 8 de la deuxième partie 22 du carter 7 et les flancs de guidage 12 de la face supérieure 11 de la première partie 21 du carter 7, constituent des zones de coulissement, c'est-à-dire des plans de coulissement l'un par rapport à l'autre.

Dans ce premier mode de réalisation de l'invention, dans le cas où la face supérieure 11 de la première partie 21 du carter 7 comprend un évidement, les bords formant l'évidement de la face supérieure 11 de la première partie 21 du carter 7 peuvent comprendre les moyens de guidage 12 de la première partie 21 du carter 7 coopérant avec les moyens de guidage 10 de la paroi supérieure 8 de la deuxième partie 2 du carter 7 constituant l'élément de recouvrement 46. Dans un tel cas, les moyens de guidage 12 de la première partie 21 du carter 7 peuvent être des nervures, en particulier identiques à ceux des parois latérales 9 de la deuxième partie 22 du carter 7.

Ici, les moyens de guidage 10 de la paroi supérieure 8 de la deuxième partie 22 du carter 7, en particulier la gorge 10b à chacune de ses deux extrémités, coopèrent d'une part avec les moyens de guidage 10 des parois latérales 9 de la deuxième partie 22 du carter 7, en particulier la nervure 10a à leur extrémité supérieure, et d'autre part avec les flancs de guidage 12 de la première partie 21 du carter 7 de sorte à constituer les moyens de guidage 27. Ainsi, les moyens de guidage 10 de la paroi supérieure 8 de la deuxième partie 22 du carter 7, en particulier la gorge 10b à chacune de ses deux extrémités, sont identiques de sorte à coopérer avec les moyens de guidage 10 des parois latérales 9 de la deuxième partie 22 du carter 7 et les moyens de guidage 12 de la première partie 21 du carter 7.

Préférentiellement, la deuxième partie 22 du carter 7 est reliée à la première partie 21 du carter 7 au moyen d'un élément de jonction 14. L'élément de recouvrement 46 formé par la paroi supérieure 8 de la deuxième partie 22 du carter 7 coopère avec des moyens de guidage 15 de l'élément de jonction 14.

Ainsi, la paroi supérieure 8 de la deuxième partie 22 du carter 7 est positionnée par rapport aux première et deuxième parties 21, 22 du carter 7 au travers de moyens de guidage 15 de l'élément de jonction 14 participant à la liaison entre la deuxième partie 22 du carter 7 et la première partie 21 du carter 7.

Dans ce premier mode de réalisation illustré aux figures 2 à 9, l'assemblage de la paroi supérieure 8 de la deuxième partie 22 du carter 7 avec la première partie 21 du carter 7 est réalisé par coulissement de la paroi supérieure 8 de la deuxième partie 22 du carter 7 par rapport à l'élément de jonction 14 puis à la première partie 21 du carter 7, et en particulier par rapport à des flancs de guidage 15 de la face supérieure 13 de l'élément de jonction 14 et à des flancs de guidage 12 de la face supérieure 11 de la première partie 21 du carter 7.

De cette manière, l'assemblage de la paroi supérieure 8 de la deuxième partie 22 du carter 7 avec l'élément de jonction 14 et avec la première partie 21 du carter 7 est peu onéreux, simple et rapide à mettre en oeuvre lors de la fabrication de l'actionneur linéaire 4, et sans avoir recours à un outillage spécifique. La liaison glissière apporte à la liaison entre la première partie 21 du carter 7 et la deuxième partie 22 du carter 7 sa rigidité. Par ailleurs, les moyens de guidage 12, 15, 27 permettent de garantir l'esthétique de l'actionneur linéaire 4 puisque ceux-ci sont invisibles suite à l'assemblage de la paroi supérieure 8 de la deuxième partie 22 du carter 7 avec l'élément de jonction 14 et la première partie 21 du carter 7.

Les éléments de guidage 12, 15, 27 reliant la paroi supérieure 8 de la deuxième partie 22 du carter 7 à l'élément de jonction 14 et à la première partie 21 du carter 7, et en particulier les flancs de guidage 27 de la paroi supérieure 8 de la deuxième partie 22 du carter 7, les flancs de guidage 15 de la face supérieure 13 de l'élément de jonction 14 et les flancs de guidage 12 de la face supérieure 11 de la première partie 21 du carter 7, constituent des zones de coulissement, et plus particulièrement des plans de coulissement.

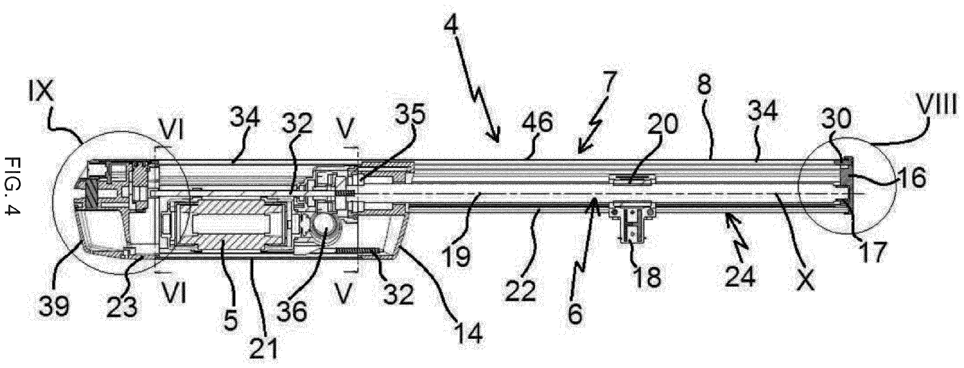

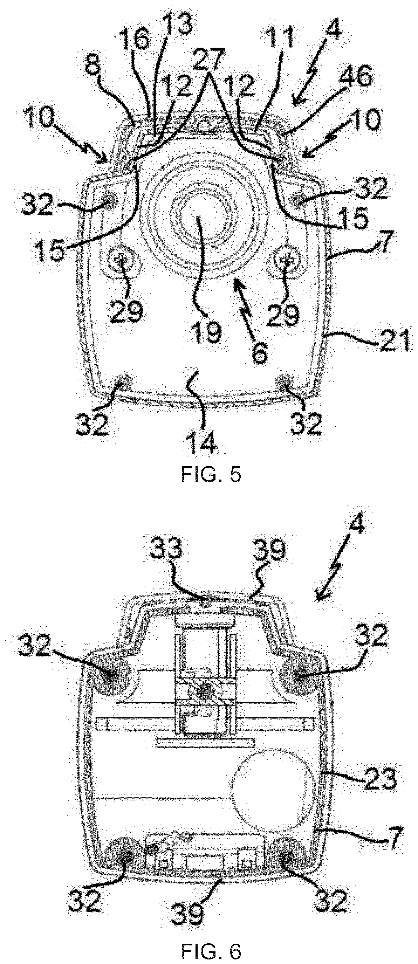

Ici, et tel qu'illustré aux figures 4 et 5, l'élément de jonction 14 présente une forme mâle coopérant avec le contour interne de la première partie 21 du carter 7 réalisé sous la forme d'un profilé. L'élément de jonction 14 comprend un épaulement coopérant avec le contour interne de la première partie 21 du carter 7 de sorte à positionner l'élément de jonction 14 par rapport à la première partie 21 du carter 7 et à bloquer en translation l'élément de jonction 14 par rapport à la première partie 21 du carter 7. L'élément de jonction 14 comprend des moyens de guidage 28 des parois latérales 9 de la deuxième partie 22 du carter 7, et en particulier des fentes de passage des parois latérales 9 au travers d'au moins une partie de l'élément de jonction 14. Ainsi, l'assemblage des parois latérales 9 de la deuxième partie 22 du carter 7 avec l'élément de jonction 14 est réalisé par coulissement de chaque paroi latérale 9 de la deuxième partie 22 du carter 7 par rapport à l'élément de jonction 14, et en particulier par rapport aux fentes de passage 28 de l'élément de jonction 14. En outre, les moyens de guidage 28 de l'élément de jonction 14 permettent de garantir un écartement entre les parois latérales 9 de la deuxième partie 22 du carter 7.

La fixation des parois latérales 9 de la deuxième partie 22 du carter 7 avec l'élément de jonction 14 est réalisée par vissage de vis de fixation 29, en particulier par vissage de vis de fixation 29 traversant de part et d'autre l'élément de jonction 14 et débouchant dans les fentes de passage 28 de l'élément de jonction 14. Comme illustré aux figures 5 et 7, l'élément de jonction 14 comprend des trous de passage des vis de fixation 29. Et les parois latérales 9 de la deuxième partie 22 du carter 7 comprennent des trous de vissage 31 coopérant avec les vis de fixation 29, en particulier des vis auto-taraudeuses. Les trous de vissage 31 des parois latérales 9 de la deuxième partie 22 du carter 7 sont formés dans les parois latérales 9 réalisées sous forme de profilé.

Avantageusement, l'extrémité de la deuxième partie 22 du carter 7, celle-ci étant formée par les parois supérieure 8 et latérales 9, opposée à la liaison de la deuxième partie 22 du carter 7 avec la première partie 21 du carter 7, est obturée par un bouchon 16. Ainsi, l'obturation de l'extrémité libre de la deuxième partie 22 du carter 7 formée par les parois supérieure 8 et latérales 9, opposée à la liaison avec la première partie 21 du carter 7, est mise en oeuvre au moindre coût, tout en garantissant la modularité et la personnalisation des différents modèles d'actionneurs 4, en particulier en donnant la possibilité de remplacer le bouchon 16 par un autre en fonction du modèle d'actionneur 4. En outre, le bouchon 16 obturant l'extrémité de la deuxième partie 22 du carter 7 formée par les parois supérieure 8 et latérales 9 de la deuxième partie 22 du carter 7 permet de protéger le système de transmission de mouvement 6 par rapport à l'environnement de l'actionneur linéaire 4, en particulier par rapport à l'eau ou des projectiles tels que des graviers. Par ailleurs, la fixation du bouchon 16 avec les parois supérieure 8 et latérales 9 de la deuxième partie 22 du carter 7 permet de solidariser l'ensemble des parois 8, 9 constituant la deuxième partie 22 du carter 7. Pratiquement, le bouchon 16 est fixé aux parois supérieure 8 et latérales 9 de la deuxième partie 22 du carter 7 au moyen de vis de fixation 30. La fixation du bouchon 16 avec les parois supérieure 8 et latérales 9 de la deuxième partie 22 du carter 7 est réalisée par vissage de vis de fixation 30, en particulier par vissage de vis de fixation 30 traversant de part et d'autre le bouchon 16.

Avantageusement, le bouchon 16 permet également de masquer des différences d'alignement des extrémités libres des parois supérieure 8 et latérales 9 de la deuxième partie 22 du carter 7 en recouvrant l'extrémité libre de chacune des parois supérieure 8 et latérales 9. Ces différences d'alignement des extrémités libres des parois supérieure 8 et latérales 9 de la deuxième partie 22 du carter 7 peuvent être dues en particulier à l'assemblage des parois supérieure 8 et latérales 9 de la deuxième partie 22 du carter 7 avec la première partie 21 du carter 7, et éventuellement avec l'élément de jonction 14.

Dans le mode de réalisation illustré aux figures 2, 7 et 8, le bouchon 16 comprend des trous de passage 37 des vis de fixation 30. Et les parois supérieure 8 et latérales 9 de la deuxième partie 22 du carter 7 comprennent des trous de vissage 31, 34 coopérant avec les vis de fixation 30, en particulier des vis auto-taraudeuses. Les trous de vissage 31, 34 des parois supérieure 8 et latérales 9 de la deuxième partie 22 du carter 7 sont formés dans les parois supérieure 8 et latérales 9 réalisées sous forme de profilé. Les trous de vissage 31 des parois latérales 9 de la deuxième partie 22 du carter 7 coopérant avec les vis de fixation 29, et ceux coopérant avec les vis de fixation 30 sont réalisés par les mêmes formes s'étendant sur toute la longueur des parois latérales 9, de sorte à réduire le coût d'obtention des profilés constituant les parois latérales 9 de la deuxième partie 22 du carter 7.

Préférentiellement, le bouchon 16 obturant l'extrémité de la deuxième partie 22 du carter 7 formée par les parois supérieure 8 et latérales 9 de la deuxième partie 22 du carter 7 supporte un palier 17 coopérant avec le système de transmission de mouvement 6, en particulier avec la tige filetée 19 comprenant une extrémité lisse, c'est-à-dire dépourvue de filetage. Ainsi, le bouchon 16 obturant l'extrémité libre de la deuxième partie 22 du carter 7 formée par les parois supérieure 8 et latérales 9 de la deuxième partie 22 du carter 7 permet d'une part de protéger le système de transmission de mouvement 6 par rapport à l'environnement de l'actionneur linéaire 4, et d'autre de part de guider le système de transmission de mouvement 6 à l'intérieur de la deuxième partie 22 du carter 7.

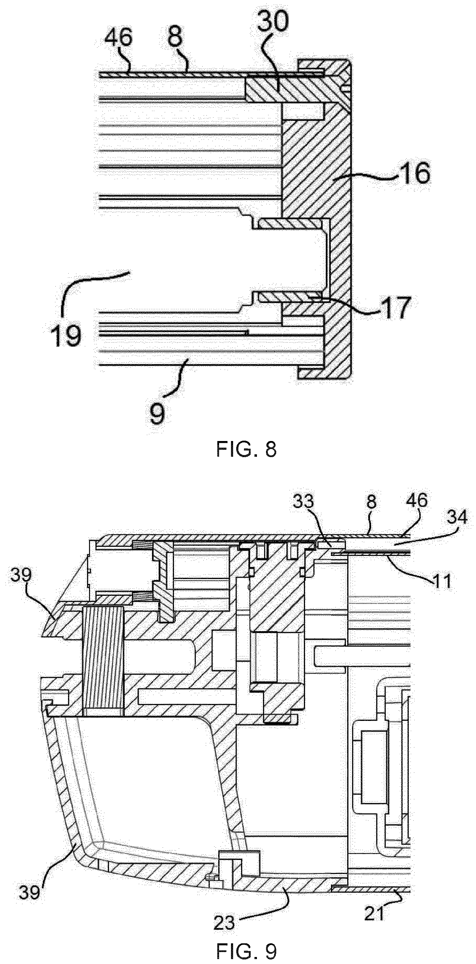

Ici, et tel qu'illustré aux figures 4 et 8, le palier 17 inséré dans le bouchon 16 est un palier lisse, ou communément appelé coussinet.

On va décrire à présent, en référence aux figures 10 à 12, un deuxième mode de réalisation de l'invention.

La deuxième partie 22 du carter 7 comprend un élément profilé, l'élément profilé comportant une face transversale 47, dite également dans la suite face supérieure 47, et deux faces latérales 49. La face transversale 47 s'étend entre les deux faces latérales 49 de la deuxième partie 22 du carter 7. Avantageusement, l'élément profilé de la deuxième partie 22 du carter 7 est un élément réalisé en matériau métallique, et préférentiellement en aluminium. L'élément profilé de la deuxième partie 22 du carter 7 forme un corps creux comprenant un évidement longitudinal 24 dans un plan inférieur de la deuxième partie 22 du carter 7. L'élément de déplacement 18 est déplacé au travers de l'évidement longitudinal 24 lors de l'activation du moteur électrique 12.

L'élément de recouvrement 46 est réalisé par une paroi distincte des première et deuxième parties 21, 22 du carter 7. Ainsi, l'actionneur linéaire 4 formé au moyen des première et deuxième parties 21, 22 du carter 7 comprend en outre un élément commun constitué par une paroi distincte formant l'élément de recouvrement 46. L'élément de recouvrement 46 est une paroi, tel un capot, disposée au-dessus de la face transversale 47 de la deuxième partie 22 du carter 7 et au-dessus de la face supérieure 11 de la première partie 21 du carter 7. L'élément de recouvrement 46 recouvre la face transversale 47 de la deuxième 22 partie du carter 7.

Ainsi, la répartition des efforts de la liaison entre les première et deuxième parties 21, 22 du carter 7 de l'actionneur linéaire 4 peut être améliorée au travers de la paroi de l'élément de recouvrement 46 recouvrant au moins en partie la face supérieure 11 de la première partie 21 du carter 7 et la face supérieure 47 de la deuxième partie 22 du carter 7.

De cette manière, le recouvrement au moins en partie de la face supérieure 11 de la première partie 21 du carter 7 et de la face supérieure 47 de la deuxième partie 22 du carter 7 par la paroi de l'élément de recouvrement 46 permet d'améliorer la qualité perçue de l'actionneur linéaire 4, et en particulier de renvoyer une perception de robustesse par un aspect monobloc obtenu par l'utilisation de l'élément de recouvrement 46 en tant que partie commune entre les première et deuxième parties 21, 22 du carter 7.

Le recouvrement au moins en partie de la face supérieure 11 de la première partie 21 du carter 7 et de la face supérieure 47 de la deuxième partie 22 du carter 7 par la paroi de l'élément de recouvrement 46 permet également de masquer la liaison entre les première et deuxième parties 21, 22 du carter 7.

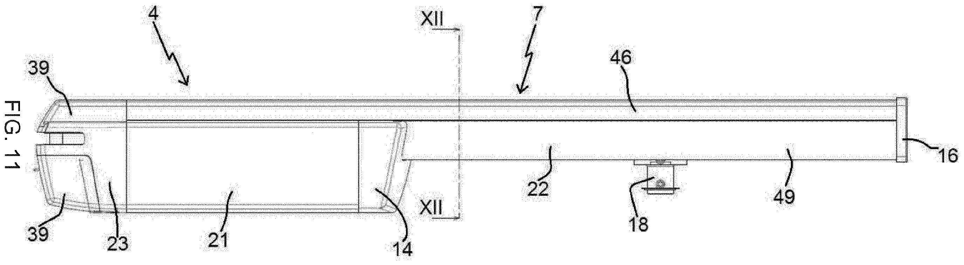

Ici, et tel qu'illustré aux figures 10 et 11, la paroi de l'élément de recouvrement 46 recouvre intégralement la face supérieure 11 de la première partie 21 du carter 7.

Ainsi, le recouvrement complet de la face supérieure 11 de la première partie 21 du carter 7 par la paroi de l'élément de recouvrement 46 permet d'améliorer encore plus efficacement la qualité perçue de l'actionneur linéaire 4, et en particulier de renvoyer la perception de robustesse par un aspect monobloc sur toute la longueur du carter 7 comprenant les première et deuxième parties 21, 22.

Avantageusement, la face supérieure 47 de la deuxième partie 22 du carter 7 comprend un évidement longitudinal 48. Ainsi, suite au retrait de l'élément de recouvrement 46, l'évidement longitudinal 48 de la face supérieure 47 de la deuxième partie 22 du carter 7 permet de pouvoir accéder depuis le dessus à l'espace défini par la deuxième partie 22 du carter 7, en particulier lors d'une opération d'installation ou de maintenance de l'actionneur linéaire 4, de sorte à faciliter les manipulations de l'intervenant.

Préférentiellement, l'élément de recouvrement 46 et la deuxième partie 22 du carter 7 sont assemblés entre eux par des moyens de guidage 10. Ainsi, l'élément de recouvrement 46 et la deuxième partie 22 du carter 7 sont reliés entre eux par des moyens de guidage 10 de sorte à former un ensemble solidaire. En outre, l'assemblage de l'élément de recouvrement 46 et de la deuxième partie 22 du carter 7 est réalisé par coulissement entre l'élément de recouvrement 46 et la deuxième partie 22 du carter 7 le long des moyens de guidage 10. Par ailleurs, le coulissement de l'élément de recouvrement 46 par rapport à la deuxième partie 22 du carter 7 au travers des moyens de guidage 10 permet de pouvoir accéder depuis le dessus à l'espace défini entre l'élément de recouvrement 46 et la deuxième partie 22 du carter 7, et éventuellement à l'espace défini par la deuxième partie 22 du carter 7 au moyen de l'évidement longitudinal 48 ménagé dans la face supérieure 47 de la deuxième partie 22 du carter 7, en particulier lors d'une opération d'installation ou de maintenance de l'actionneur linéaire 4, de sorte à faciliter les manipulations de l'intervenant. De cette manière, le coulissement de l'élément de recouvrement 46 par rapport à la deuxième partie 22 du carter 7 au travers des moyens de guidage 10 permet de pouvoir accéder au système de transmission de mouvement 6 au travers de l'évidement longitudinal 48 ménagé dans la face supérieure 47 de la deuxième partie 22 du carter 7. En outre, le coulissement de l'élément de recouvrement 46 par rapport à la deuxième partie 22 du carter 7 au travers des moyens de guidage 10 permet de pouvoir accéder à au moins un capteur (non représenté) et/ou à au moins une butée mécanique (non représentée) disposés entre l'élément de recouvrement 46 et la deuxième partie 22 du carter 7, et éventuellement à l'intérieur de la deuxième partie 22 du carter 7 au travers de l'évidement longitudinal 48 ménagé dans la face supérieure 47 de la deuxième partie 22 du carter 7.

Avantageusement, les moyens de guidage 10 de l'élément de recouvrement 46 et de la deuxième partie 22 du carter 7, en particulier de la partie supérieure de la deuxième partie 22 du carter 7, sont des éléments de liaison formant des nervures 10a et des gorges 10b de formes conjuguées, c'est-à-dire des éléments en saillie d'une paroi et s'emboîtant, en particulier par coulissement, dans des éléments en retrait correspondants d'une autre paroi.

Ici, les faces latérales 49 de la deuxième partie 22 du carter 7 comportent une nervure 10a à leur extrémité supérieure, en particulier suivant leur prolongement au-dessus de la face supérieure 47 de la deuxième partie 22 du carter 7, et l'élément de recouvrement 46 comporte une gorge 10b à chacune de ses deux extrémités de sorte que les gorges 10b de l'élément de recouvrement 46 s'engagent respectivement par coulissement dans la nervure 10a de chaque face latérale 49 de la deuxième partie 22 du carter 7. Ainsi, l'assemblage de l'élément de recouvrement 46 et de la deuxième partie 22 du carter 7 est réalisé par coulissement entre eux le long des éléments de liaison formant des nervures 10a et des gorges 10b. De cette manière, l'assemblage de l'élément de recouvrement 46 et de la deuxième partie 22 du carter 7 est peu onéreux, simple et rapide à mettre en œuvre lors de la fabrication de l'actionneur linéaire 4, et sans avoir recours à un outillage spécifique. En outre, de tels moyens de guidage 10 permettent de garantir l'esthétique de l'actionneur linéaire 4 puisque ceux-ci sont invisibles suite à l'assemblage de l'élément de recouvrement 46 et de la deuxième partie 22 du carter 7.

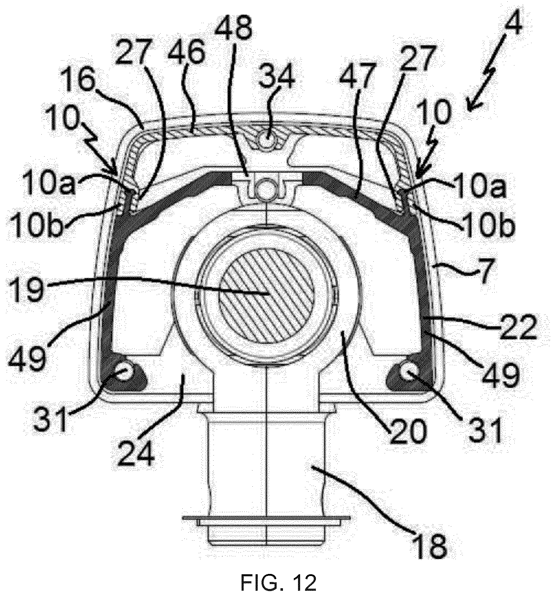

Ici, et tel qu'illustré aux figures 10 et 12, les nervures 10a sont réalisées respectivement par un élément en saillie en forme de queue d'aronde, c'est-à-dire de forme trapézoïdale. Et les gorges 10b associées correspondent respectivement à un élément en creux de même forme. Ainsi, la forme en queue d'aronde des nervures 10a et des gorges 10b permet d'éviter une désolidarisation de la deuxième partie 22 du carter 7 par rapport à l'élément de recouvrement 46 suite à leur assemblage entre eux par coulissement.

Dans un autre mode de réalisation, les nervures 10a sont réalisées respectivement par un élément en saillie de forme longitudinale, et en particulier rectiligne ou courbée. Et les gorges 10b associées correspondent respectivement à un élément en creux de même forme.

Préférentiellement, l'élément de recouvrement 46, étant réalisé par une paroi distincte des première et deuxième parties 21, 22 du carter 7, comprend des moyens de guidage 27 coopérant avec des moyens de guidage 12 de la première partie 21 du carter 7. L'élément de recouvrement 46 constitue ainsi une protection efficace contre la poussière, et une surface relativement plane facile à nettoyer.

La perception de robustesse par un aspect monobloc entre les première et deuxième parties 21, 22 du carter 7 de l'actionneur linéaire 4 est également garantie par les moyens de guidage 27 de la paroi supplémentaire 46 disposée au-dessus des première et deuxième parties 21, 22 du carter 7 coopérant avec les moyens de guidage 12 de la première partie 21 du carter 7.

Avantageusement, les moyens de guidage 12, 27 de l'élément de recouvrement 46 et de la première partie 21 du carter 7 sont des éléments de liaison par coulissement. Ainsi, l'assemblage de l'élément de recouvrement 46 avec la première partie 21 du carter 7 est réalisé par coulissement de l'élément de recouvrement 46 par rapport à la première partie 21 du carter 7, et en particulier par rapport à des flancs de guidage 12 de la face supérieure 11 de la première partie 21 du carter 7. De cette manière, l'assemblage de l'élément de recouvrement 46 avec la première partie 21 du carter 7 est peu onéreux, simple et rapide à mettre en œuvre lors de la fabrication de l'actionneur linéaire 4, et sans avoir recours à un outillage spécifique. En outre, de tels moyens de guidage 12, 27 permettent de garantir l'esthétique de l'actionneur linéaire 4 puisque ceux-ci sont invisibles suite à l'assemblage de l'élément de recouvrement 46 avec la première partie 21 du carter 7.

Les éléments de guidage 12, 27 reliant l'élément de recouvrement 46 à la première partie 21 du carter 7, et en particulier les flancs de guidage 27 de l'élément de recouvrement 46 et les flancs de guidage 12 de la face supérieure 11 de la première partie 21 du carter 7, constituent des zones de coulissement, c'est-à-dire des plans de coulissement l'un par rapport à l'autre.

Dans ce deuxième mode de réalisation de l'invention, dans le cas où la face supérieure 11 de la première partie 21 du carter 7 comprend un évidement, les bords formant l'évidement de la face supérieure 11 de la première partie 21 du carter 7 peuvent comprendre les moyens de guidage 12 de la première partie 21 du carter 7 coopérant avec les moyens de guidage 10 de la paroi supplémentaire constituant l'élément de recouvrement 46.

Dans un tel cas, les moyens de guidage 12 de la première partie 21 du carter 7 peuvent être des nervures, en particulier identiques à ceux s'étendant dans le prolongement des faces latérales 49 de la deuxième partie 22 du carter 7.

Ici, les moyens de guidage 10 de la paroi supplémentaire 46, en particulier la gorge 10b à chacune de ses deux extrémités, coopèrent d'une part avec les moyens de guidage 10 réalisés dans l'alignement des faces latérales 49 de la deuxième partie 22 du carter 7, en particulier la nervure 10a à chacune des extrémités en saillie, et d'autre part avec les moyens de guidage 12 de la première partie 21 du carter 7 de sorte à constituer les moyens de guidage 27. Ainsi, les moyens de guidage 10 de la paroi supplémentaire 46, en particulier la gorge 10b à chacune de ses deux extrémités, sont identiques de sorte à coopérer avec les moyens de guidage 10 de la deuxième partie 22 du carter 7 et les moyens de guidage 12 de la première partie 21 du carter 7.

Préférentiellement, la deuxième partie 22 du carter 7 est reliée à la première partie 21 du carter 7 au moyen d'un élément de jonction 14. L'élément de recouvrement 46 formé par la paroi supplémentaire coopère avec des moyens de guidage 15 de l'élément de jonction 14, ici constitués par des flancs de guidage 15 de l'élément de jonction 14. Ainsi, la paroi supplémentaire 46 est positionnée par rapport aux première et deuxième parties 21, 22 du carter 7 au travers de moyens de guidage 15 de l'élément de jonction 14 participant à la liaison entre la deuxième partie 22 du carter 7 et la première partie 21 du carter 7.

Dans ce deuxième mode de réalisation illustré aux figures 10 à 12, l'assemblage de la paroi supplémentaire 46 avec les première et deuxième parties 21, 22 du carter 7 est réalisé par coulissement de la paroi supplémentaire 46 par rapport à la deuxième partie 22 du carter 7, puis à l'élément de jonction 14, et à la première partie 21 du carter 7, et en particulier par rapport à des éléments de liaison 10 de la deuxième partie 22 du carter 7, à des flancs de guidage 15 de la face supérieure 13 de l'élément de jonction 14 et à des flancs de guidage 12 de la face supérieure 11 de la première partie 21 du carter 7. De cette manière, l'assemblage de la paroi supplémentaire 46 avec l'élément de jonction 14 et avec les première et deuxième parties 21, 22 du carter 7 est peu onéreux, simple et rapide à mettre en œuvre lors de la fabrication de l'actionneur linéaire 4, et sans avoir recours à un outillage spécifique. Par ailleurs, les moyens de guidage 12, 15, 27 permettent de garantir l'esthétique de l'actionneur linéaire 4 puisque ceux-ci sont invisibles suite à l'assemblage de la paroi supplémentaire 46 avec l'élément de jonction 14 et la première partie 21 du carter 7.

Les éléments de guidage 12, 15, 27 reliant la paroi supplémentaire 46 à l'élément de jonction 14 et à la première partie 21 du carter 7, et en particulier les flancs de guidage 27 de la paroi supplémentaire 46, les flancs de guidage 15 de la face supérieure 13 de l'élément de jonction 14 et les flancs de guidage 12 de la face supérieure 11 de la première partie 21 du carter 7, constituent des zones de coulissement, et plus particulièrement des plans de coulissement.

Dans ce deuxième mode de réalisation illustré aux figures 10 à 12, l'élément de jonction 14 comprend des moyens de guidage 28 des faces latérales 49 de la deuxième partie 22 du carter 7, et en particulier des fentes de passage des faces latérales 49 au travers d'au moins une partie de l'élément de jonction 14. Ainsi, l'assemblage des faces latérales 49 de la deuxième partie 22 du carter 7 avec l'élément de jonction 14 est réalisé par coulissement de chaque face latérale 49 de la deuxième partie 22 du carter 7 par rapport à l'élément de jonction 14, et en particulier par rapport aux fentes de passage 28 de l'élément de jonction 14.

Ici, la fixation des faces latérales 49 de la deuxième partie 22 du carter 7 avec l'élément de jonction 14 est réalisée par vissage de vis de fixation, en particulier par vissage de vis de fixation traversant de part et d'autre l'élément de jonction 14 et débouchant dans les fentes de passage 28 de l'élément de jonction 14. A la figure 10, les vis de fixation des faces latérales 49 de la deuxième partie 22 du carter 7 avec l'élément de jonction 14 ne sont pas illustrées. Néanmoins, celles-ci sont semblables aux vis de fixation 29 illustrées à la figure 7 du premier mode de réalisation de l'invention. Dans le deuxième mode de réalisation, l'élément de jonction 14 comprend des trous de passage des vis de fixation. Et les faces latérales 49 de la deuxième partie 22 du carter 7 comprennent des trous de vissage 31 coopérant avec les vis de fixation, en particulier des vis auto-taraudeuses. Ici, les trous de vissage 31 des faces latérales 49 de la deuxième partie 22 du carter 7 sont formés dans la deuxième partie 22 du carter 7 réalisée sous forme de bloc profilé.

Avantageusement, l'extrémité de la deuxième partie 22 du carter 7, opposée à la liaison de la deuxième partie 22 du carter 7 avec la première partie 21 du carter 7, est obturée par un bouchon 16. Ainsi, l'obturation de l'extrémité libre de la deuxième partie 22 du carter 7, opposée à la liaison avec la première partie 21 du carter 7, est mise en œuvre au moindre coût, tout en garantissant la modularité et la personnalisation des différents modèles d'actionneurs 4, en particulier en donnant la possibilité de remplacer le bouchon 16 par un autre en fonction du modèle d'actionneur 4. En outre, le bouchon 16 obturant l'extrémité de la deuxième partie 22 du carter 7 permet de protéger le système de transmission de mouvement 6 par rapport à l'environnement de l'actionneur linéaire 4, en particulier par rapport à l'eau ou des projectiles tels que des graviers. Par ailleurs, le bouchon 16 permet également d'obturer l'espace défini entre la deuxième partie 22 du carter 7 et l'élément de recouvrement 46. De cette manière, la fixation du bouchon 16 avec la deuxième partie 22 du carter 7 et l'élément de recouvrement 46 permet de solidariser l'ensemble. Pratiquement, le bouchon 16 est fixé à la deuxième partie 22 du carter 7 et à l'élément de recouvrement 46 au moyen de vis de fixation 30. Ici, la fixation du bouchon 16 avec la deuxième partie 22 du carter 7 et l'élément de recouvrement 46 est réalisée par vissage de vis de fixation 30, en particulier par vissage de vis de fixation 30 traversant de part et d'autre le bouchon 16.

Avantageusement, le bouchon 16 permet également de masquer des différences d'alignement des extrémités libres de la deuxième partie 22 du carter 7 et de l'élément de recouvrement 46 en recouvrant l'extrémité libre de la deuxième partie 22 du carter 7 et de la paroi supplémentaire constituant l'élément de recouvrement 46. Ces différences d'alignement des extrémités libres de la deuxième partie 22 du carter 7 et de l'élément de recouvrement 46 peuvent être dues en particulier à l'assemblage de la deuxième partie 22 du carter 7 et de l'élément de recouvrement 46 avec la première partie 21 du carter 7, et éventuellement avec l'élément de jonction 14.

Dans le mode de réalisation illustré à la figure 10, le bouchon 16 comprend des trous de passage 37 des vis de fixation 30. La deuxième partie 22 du carter 7 et l'élément de recouvrement 46 comprennent des trous de vissage 31, 34 coopérant avec les vis de fixation 30, en particulier des vis auto-taraudeuses. Les trous de vissage 31, 34 de la deuxième partie 22 du carter 7 et de l'élément de recouvrement 46 sont formés dans la deuxième partie 22 du carter 7 réalisée sous forme de bloc profilé et dans la paroi supplémentaire constituant l'élément de recouvrement 46 réalisée sous forme de profilé. Les trous de vissage 31 des faces latérales 49 de la deuxième partie 22 du carter 7 coopérant avec les vis de fixation de l'élément de jonction 14, et ceux coopérant avec les vis de fixation 30 du bouchon 16 sont réalisés par les mêmes formes s'étendant sur toute la longueur des faces latérales 49, de sorte à réduire le coût d'obtention du bloc profilé constituant la deuxième partie 22 du carter 7.

Préférentiellement, le bouchon 16 obturant l'extrémité de la deuxième partie 22 du carter 7 supporte un palier 17 coopérant avec le système de transmission de mouvement 6, en particulier avec la tige filetée 19 comprenant une extrémité lisse, c'est-à-dire dépourvue de filetage. Ainsi, le bouchon 16 obturant l'extrémité libre de la deuxième partie 22 du carter 7 permet d'une part de protéger le système de transmission de mouvement 6 par rapport à l'environnement de l'actionneur linéaire 4, et d'autre de part de guider le système de transmission de mouvement 6 à l'intérieur de la deuxième partie 22 du carter 7.

Ici, le palier 17 inséré dans le bouchon 16 est un palier lisse, ou communément appelé coussinet.

On va décrire à présent, en référence aux figures 2 à 12, d'autres caractéristiques en relation avec les premier et deuxième modes de réalisation de l'invention.

Avantageusement, l'extrémité de la première partie 21 du carter 7, opposée à la liaison avec la deuxième partie 22 du carter 7, est obturée par un embout 23. L'embout 23 obturant l'extrémité libre de la première partie 21 du carter 7 permet de protéger notamment le moteur électrique 5 par rapport à l'environnement de l'actionneur linéaire 4, en particulier par rapport à l'eau ou des projectiles tels que des graviers. La fixation de l'embout 23 avec la première partie 21 du carter 7 et avec l'élément de jonction 14 est réalisée par vissage de vis de fixation 32, en particulier par vissage de vis de fixation 32 traversant de part et d'autre l'embout 23. Ainsi, le retrait de l'embout 23 obturant l'extrémité libre de la première partie 21 du carter 7, en particulier par le dévissage des vis de fixation 32, permet de donner accès au moteur électrique 5 disposé à l'intérieur de la première partie 21 du carter 7. En référence aux figures 4 à 6, l'embout 23 comprend des trous de passage des vis de fixation 32. La première partie 21 du carter 7 comprend des trous de vissage coopérant avec les vis de fixation 32. Et l'élément de jonction 14 comprend des trous de vissage coopérant avec les vis de fixation 32. Les vis de fixation 32 sont des vis auto-taraudeuses. Les trous de vissage de la première partie 21 du carter 7 sont formés dans les faces du contour de la première partie 21 du carter 7, la première partie 21 du carter 7 étant réalisée sous forme d'un unique profilé.

Ici, et tel qu'illustré aux figures 4, 6, 7, 10 et 11, un capot 39 est disposé sur l'embout 23 de sorte à prolonger l'élément de recouvrement 46, et à rattraper les tolérances d'assemblage de la paroi constituant l'élément de recouvrement 46 sur la première partie 21 du carter 7.

Dans ce mode de réalisation, le capot 39 assemblé sur l'embout 23 est réalisé en deux pièces. Et le capot 39 est fixé sur l'embout 23 par des moyens de fixation, tels que par exemple des éléments d'encliquetage élastique.

Dans le premier mode de réalisation illustré aux figures 2 à 9, les moyens de guidage 10b de la paroi supérieure 8 de la deuxième partie 22 du carter 7 coopèrent avec les moyens de guidage 10a des parois latérales 9 de la deuxième partie 22 du carter 7 de sorte que la paroi supérieure 8 de la deuxième partie 22 du carter 7 coulisse par rapport aux parois latérales 9 de la deuxième partie 22 du carter 7. Et les moyens de guidage 27 de la paroi supérieure 8 de la deuxième partie 22 du carter 7 coopèrent avec les moyens de guidage 12 de la première partie 21 du carter 7 de sorte que la paroi supérieure 8 de la deuxième partie 22 du carter 7 coulisse par rapport à la première partie 21 du carter 7, en particulier jusqu'à l'embout 23 fixé sur la première partie 21 du carter 7.

En outre, les moyens de guidage 27 de la paroi supérieure 8 de la deuxième partie 22 du carter 7 coopèrent également avec les moyens de guidage 15 de l'élément de jonction 14 de sorte que la paroi supérieure 8 de la deuxième partie 22 du carter 7 coulisse par rapport à l'élément de jonction 14 disposé entre la deuxième partie 22 et la première partie 21 du carter 7.

Dans le deuxième mode de réalisation illustré aux figures 10 à 12, les moyens de guidage 10b de la paroi supplémentaire 46 coopèrent avec les moyens de guidage 10a de la deuxième partie 22 du carter 7 de sorte que la paroi supplémentaire 46 coulisse par rapport à la deuxième partie 22 du carter 7. Et les moyens de guidage 27 de la paroi supplémentaire 46 coopèrent avec les moyens de guidage 12 de la première partie 21 du carter 7 de sorte que la paroi supplémentaire 46 coulisse par rapport à la première partie 21 du carter 7, en particulier jusqu'à l'embout 23 fixé sur la première partie 21 du carter 7.

En outre, les moyens de guidage 27 de la paroi supplémentaire 46 coopèrent également avec les moyens de guidage 15 de l'élément de jonction 14 de sorte que la paroi supplémentaire 46 coulisse par rapport à l'élément de jonction 14 disposé entre la deuxième partie 22 et la première partie 21 du carter 7.

Avantageusement, l'embout 23 fixé sur la première partie 21 du carter 7 comprend un pion 33, où le pion 33 coopère avec un trou 34 de l'élément de recouvrement 46, tel qu'illustré par exemple aux figures 6, 7, 9, 10 et 12. Ainsi, l'élément de recouvrement 46 est bloqué en translation par le positionnement du pion 33 de l'embout 23 dans le trou 34 de l'élément de recouvrement 46.

En outre, le positionnement du pion 33 de l'embout 23 dans le trou 34 de l'élément de recouvrement 46 permet d'éviter un déplacement suivant une direction orthogonale à la face supérieure 11 de la première partie 21 du carter 7, autrement dit un déplacement vertical.

Ici, et tel qu'illustré aux figures 7 et 10, le trou de vissage 34 de l'élément de recouvrement 46 coopérant avec la vis de fixation 30 et le trou 34 de l'élément de recouvrement 46 coopérant avec le pion 33 de l'embout 23 sont réalisés par les mêmes formes s'étendant sur toute la longueur de l'élément de recouvrement 46, de sorte à réduire le coût d'obtention du profilé constituant l'élément de recouvrement 46.

Dans le premier mode de réalisation, l'élément de recouvrement 46 est constitué par la paroi supérieure 8 de la deuxième partie 22 du carter 7. Et dans le deuxième mode de réalisation, l'élément de recouvrement 46 est constitué par une paroi distincte des première et deuxième parties 21, 22 du carter 7.

Le trou 34 est ménagé dans une nervure s'étendant sur la face interne de l'élément de recouvrement 46.

Ici, et tel qu'illustré aux figures 7 et 10, la face supérieure 11 de la première partie 21 du carter 7 comprend une rainure 38 de passage de la nervure ménagée sur la face interne de la paroi de l'élément de recouvrement 46.

Et la face supérieure 13 de l'élément de jonction 14 comprend également une rainure 44 de passage de la nervure ménagée sur la face interne de l'élément de recouvrement 46.

La rainure 38 de la face supérieure 11 de la première partie 21 du carter 7 et la rainure 44 de la face supérieure 13 de l'élément de jonction 14 sont de forme identique et alignées l'une après l'autre de sorte à permettre le coulissement de la nervure ménagée sur la face interne de la paroi de l'élément de recouvrement 46 à l'intérieur des rainures 38 et 44.

Grâce à la présente invention, un tel actionneur linéaire formé au moyen des première et deuxième parties du carter comprend un élément commun constitué par l'élément de recouvrement recouvrant d'une part le côté supérieur de la deuxième partie du carter et d'autre part au moins en partie le côté supérieur de la première partie du carter.

De cette manière, le recouvrement au moins en partie du côté supérieur de la première partie du carter et du côté supérieur de la deuxième partie du carter par l'élément de recouvrement permet d'améliorer la qualité perçue de l'actionneur linéaire, et en particulier de renvoyer une perception de robustesse par un aspect monobloc obtenu par l'utilisation de l'élément de recouvrement en tant que partie commune entre les première et deuxième parties du carter.

En outre, la répartition des efforts de la liaison entre les première et deuxième parties du carter de l'actionneur linéaire peut être améliorée au travers de l'élément de recouvrement recouvrant d'une part le côté supérieur de la deuxième partie du carter et d'autre part au moins en partie le côté supérieur de la première partie du carter.

Bien entendu, de nombreuses modifications peuvent être apportées aux exemples de réalisation décrits précédemment sans sortir du cadre de l'invention.

En particulier, la matière des première et deuxième parties du carter peut être différente, notamment en matière plastique.

En outre, les modes de réalisation et variantes mentionnés ci-dessus peuvent être combinés entre eux pour générer d'autres modes de réalisation de l'invention.

## Revendications

1. Actionneur linéaire (4) destiné à manœuvrer un écran (3) obturant une ouverture (2) réalisée dans un bâtiment ou une enceinte, l'actionneur linéaire (4) étant destiné à être relié d'une part à l'écran (3) et d'autre part au bâtiment ou à l'enceinte, l'actionneur linéaire (4) comprenant au moins :
- un moteur électrique (5),
- un réducteur (36),
- un système de transmission de mouvement (6), le système de transmission de mouvement (6) comprenant une tige filetée (19) et un écrou (20), la tige filetée (19) étant entraînée en rotation par le moteur électrique (5) et le réducteur (36), et l'écrou (20) étant déplacé en translation sur la tige filetée (19), et
- un carter (7) comprenant une première partie (21) à l'intérieur de laquelle est disposé le moteur électrique (5), et une deuxième partie (22) à l'intérieur de laquelle est disposé le système de transmission de mouvement (6), les première et deuxième parties (21, 22) du carter (7) étant assemblées entre elles de sorte à former une liaison, le carter (7) présentant un côté exposé correspondant à un côté externe de l'actionneur linéaire (4), le côté externe du carter (7) étant le côté supérieur du carter (7) en position assemblée de l'actionneur linéaire (4) par rapport au dispositif d'occultation (1),
**caractérisé en ce que** l'actionneur linéaire (4) comprend en outre :
- un élément commun à la première partie (21) du carter (7) et à la deuxième partie (22) du carter (7), l'élément commun étant un élément de recouvrement (46) recouvrant le côté supérieur de la deuxième partie (22) du carter (7) et au moins en partie le côté supérieur de la première partie (21) du carter (7), de sorte à masquer la liaison entre les première et deuxième parties (21, 22) du carter (7), du côté supérieur du carter (7).

2. Actionneur linéaire (4) selon la revendication 1, **caractérisé en ce que** la deuxième partie (22) du carter (7) comprend deux parois latérales (9) et une paroi transversale (8) s'étendant entre les deux parois latérales (9), où l'élément de recouvrement (46) est réalisé par la paroi transversale (8) de la deuxième partie (22) du carter (7).

3. Actionneur linéaire (4) selon la revendication 2, **caractérisé en ce que** les parois transversale (8) et latérales (9) de la deuxième partie (22) du carter (7) sont assemblées entre elles par des moyens de guidage (10), constituant de préférence des liaisons glissières.

4. Actionneur linéaire (4) selon la revendication 3, **caractérisé en ce que** les moyens de guidage (10) des parois transversale (8) et latérales (9) de la deuxième partie (22) du carter (7) comprennent des éléments de liaison formant des nervures (10a) et des gorges (10b) ayant des profils conjugués.

5. Actionneur linéaire (4) selon la revendication 1, **caractérisé en ce que** l'élément de recouvrement (46) est réalisé par une paroi distincte des première et deuxième parties (21, 22) du carter (7).

6. Actionneur linéaire (4) selon la revendication 5, **caractérisé en ce qu'**une face transversale (47) de la deuxième partie (22) du carter (7) comprend un évidement longitudinal (48).

7. Actionneur linéaire (4) selon la revendication 5 ou la revendication 6, **caractérisé en ce que** l'élément de recouvrement (46) et la deuxième partie (22) du carter (7) sont assemblés entre eux par des moyens de guidage (10).

8. Actionneur linéaire (4) selon la revendication 7, **caractérisé en ce que** les moyens de guidage (10) de l'élément de recouvrement (46) et de la deuxième partie (22) du carter (7) comprennent des éléments de liaison formant des nervures (10a) et des gorges (10b) ayant des profils conjugués.

9. Actionneur linéaire (4) selon l'une quelconque des revendications 1 à 8, **caractérisé en ce que** l'élément de recouvrement (46) comprend des moyens de guidage (27) coopérant avec des moyens de guidage (12) de la première partie (21) du carter (7).

10. Actionneur linéaire (4) selon la revendication 9, **caractérisé en ce que** les moyens de guidage (12, 27) de l'élément de recouvrement (46) et de la première partie (21) du carter (7) sont des éléments de liaison par coulissement.

11. Actionneur linéaire (4) selon l'une quelconque des revendications 1 à 10, **caractérisé en ce que** la deuxième partie (22) du carter (7) est reliée à la première partie (21) du carter (7) au moyen d'un élément de jonction (14), l'élément de recouvrement (46) coopérant avec des moyens de guidage (15) de l'élément de jonction (14).

12. Actionneur linéaire (4) selon l'une quelconque des revendications 1 à 11, **caractérisé en ce qu'**une extrémité de la deuxième partie (22) du carter (7), opposée à la première partie (21) du carter (7), est obturée par un bouchon (16).

13. Actionneur linéaire (4) selon la revendication 12, **caractérisé en ce que** le bouchon (16) obturant l'extrémité de la deuxième partie (22) du carter (7) supporte un palier (17) coopérant avec le système de transmission de mouvement (6).

14. Actionneur linéaire (4) selon l'une quelconque des revendications 1 à 13, **caractérisé en ce qu'**une extrémité de la première partie (21) du carter (7), opposée à la deuxième partie (22) du carter (7), est obturée par un embout (23).

15. Actionneur linéaire (4) selon l'une quelconque des revendications 1 à 14, **caractérisé en ce que** l'élément de recouvrement (46) présente une face extérieure exposée de profil uniforme, et l'élément de recouvrement (46) présente de préférence une section uniforme.

16. Dispositif d'occultation (1) comprenant au moins un écran (3) pouvant être déplacé autour d'un axe de rotation (25) et entraîné en rotation par un actionneur linéaire (4), **caractérisé en ce que** le dispositif d'occultation (1) comprend un actionneur linéaire (4) conforme à l'une quelconque des revendications 1 à 15.

## Patentansprüche

1. Lineares Stellglied (4), das ausgelegt ist, um einen Schirm (3) zu betätigen, der eine Öffnung (2) verschließt, die in einem Gebäude oder einem Behälter ausgebildet ist, wobei das lineare Stellglied (4) ausgelegt ist, um einerseits mit dem Schirm (3) und andererseits mit dem Gebäude oder dem Behälter verbunden zu sein, wobei das lineare Stellglied (4) mindestens umfasst:
- einen elektrischen Motor (5),
- ein Getriebe (36),
- ein System zur Übertragung von Bewegung (6), wobei das System zur Übertragung von Bewegung (6) eine gewindegeschnittene Stange (19) und eine Schraubenmutter (20) umfasst, wobei die gewindegeschnitten Stange (19) durch den elektrischen Motor (5) und das Getriebe (36) in Drehung versetzt wird, und wobei die Schraubenmutter (20) auf der gewindegeschnittenen Stange (19) in Translation bewegt wird, und
- ein Gehäuse (7), umfassend einen ersten Teil (21), in dessen Inneren der elektrische Motor (5) angeordnet ist, und einen zweiten Teil (22), in dessen Inneren das System zur Übertragung von Bewegung (6) angeordnet ist, wobei der erste und zweite Teil (21, 22) des Gehäuses (7) untereinander derart montiert sind, dass sie eine Verbindung bilden, wobei das Gehäuse (7) eine ausgesetzte Seite aufweist, die einer äußeren Seite des linearen Stellglieds (4) entspricht, wobei die äußere Seite des Gehäuses (7) die obere Seite des Gehäuses (7) in der montierten Position des linearen Stellglieds (4) mit Bezug auf die Abdeckvorrichtung (1) ist,
**dadurch gekennzeichnet, dass** das lineare Stellglied (4) außerdem umfasst:
- ein gemeinsames Element des ersten Teils (21) des Gehäuses (7) und des zweiten Teils (22) des Gehäuses (7), wobei das gemeinsame Element ein Umhüllungselement (46) ist, das die obere Seite des zweiten Teils (22) des Gehäuses (7) und mindestens teilweise die obere Seite des ersten Teils (21) des Gehäuses (7) umhüllt, um die Verbindung zwischen dem ersten und zweiten Teil (21, 22) des Gehäuses (7) auf der oberen Seite des Gehäuses (7) zu verdecken.

2. Lineares Stellglied (4) nach Anspruch 1, **dadurch gekennzeichnet, dass** der zweite Teil (22) des Gehäuses (7) zwei seitliche Wände (9) und eine Querwand (8) umfasst, die sich zwischen den zwei seitlichen Wänden (9) erstreckt, wobei das Umhüllungselement (46) von der Querwand (8) des zweiten Teils (22) des Gehäuses (7) gebildet ist.

3. Lineares Stellglied (4) nach Anspruch 2, **dadurch gekennzeichnet, dass** die Quer- (8) und Seitenwände (9) des zweiten Teils (22) des Gehäuses (7) untereinander durch Führungsmittel (10) montiert sind, die vorzugsweise Gleitverbindungen darstellen.

4. Lineares Stellglied (4) nach Anspruch 3, **dadurch gekennzeichnet, dass** die Führungsmittel (10) der Quer- (8) und Seitenwände (9) des zweiten Teils (22) des Gehäuses (7) Verbindungselemente umfassen, die Rippen (10a) und Auskehlungen (10b) mit Gegenprofilen bilden.

5. Lineares Stellglied (4) nach Anspruch 1, **dadurch gekennzeichnet, dass** das Umhüllungselement (46) von einer Wand gebildet ist, die verschieden von dem ersten und zweiten Teil (21, 22) des Gehäuses (7) ist.

6. Lineares Stellglied (4) nach Anspruch 5, **dadurch gekennzeichnet, dass** eine Querfläche (47) des zweiten Teils (22) des Gehäuses (7) eine sich in Längsrichtung erestreckende Aussparung (48) umfasst.

7. Lineares Stellglied (4) nach Anspruch 5 oder Anspruch 6, **dadurch gekennzeichnet, dass** das Umhüllungselement (46) und der zweite Teil (22) des Gehäuses (7) untereinander durch Führungsmittel (10) montiert sind.

8. Lineares Stellglied (4) nach Anspruch 7, **dadurch gekennzeichnet, dass** die Führungsmittel (10) des Umhüllungselements (46) und des zweiten Teils (22) des Gehäuses (7) Verbindungselemente umfassen, die Rippen (10a) und Auskehlungen (10b) mit Gegenprofilen bilden.

9. Lineares Stellglied (4) nach einem der Ansprüche 1 bis 8, **dadurch gekennzeichnet, dass** das Umhüllungselement (46) Führungsmittel (27) umfasst, die mit Führungsmitteln (12) des ersten Teils (21) des Gehäuses (7) zusammenarbeiten.

10. Lineares Stellglied (4) nach Anspruch 9, **dadurch gekennzeichnet, dass** die Führungsmittel (12, 27) des Umhüllungselements (46) und des ersten Teils (21) des Gehäuses (7) Elemente zur Verbindung durch Gleiten sind.

11. Lineares Stellglied (4) nach einem der Ansprüche 1 bis 10, **dadurch gekennzeichnet, dass** der zweite Teil (22) des Gehäuses (7) mit dem ersten Teil (21) des Gehäuses (7) mit Hilfe eines Verbindungselements (14) verbunden ist, wobei das Umhüllungselement (46) mit den Führungsmitteln (15) des Verbindungselements (14) zusammenarbeitet.

12. Lineares Stellglied (4) nach einem der Ansprüche 1 bis 11, **dadurch gekennzeichnet, dass** ein dem ersten Teil (21) des Gehäuses (7) entgegengesetztes Ende des zweiten Teils (22) des Gehäuses (7) von einem Stopfen (16) verschlossen ist.

13. Lineares Stellglied (4) nach Anspruch 12, **dadurch gekennzeichnet, dass** der Stopfen (16), der das Ende des zweiten Teils (22) des Gehäuses (7) verschließt, ein Lager (17) trägt, das mit dem System zur Übertragung von Bewegung (6) zusammenarbeitet.

14. Lineares Stellglied (4) nach einem der Ansprüche 1 bis 13, **dadurch gekennzeichnet, dass** ein dem zweiten Teil (22) des Gehäuses (7) entgegengesetztes Ende des ersten Teils (21) des Gehäuses (7), von einem Stutzen (23) verschlossen ist.

15. Lineares Stellglied (4) nach einem der Ansprüche 1 bis 14, **dadurch gekennzeichnet, dass** das Umhüllungselement (46) eine ausgesetzte äußere Seite mit gleichförmigem Profil aufweist und das Umhüllungselement (46) vorzugsweise einen gleichförmigen Querschnitt aufweist.

16. Abdeckvorrichtung (1), umfassend mindestens einen Schirm (3), der um eine Drehachse (25) bewegt und durch ein lineares Stellglied (4) in Drehung versetzt werden kann, **dadurch gekennzeichnet, dass** die Abdeckvorrichtung (1) ein lineares Stellglied (4) nach einem der Ansprüche 1 bis 15 umfasst.

## Claims

1. A linear actuator (4) intended to maneuver a screen (3) closing off an opening (2) made in a building or an enclosure, the linear actuator (4) being intended to be coupled on the one hand to the screen (3) and on the other hand to the building or to the enclosure, the linear actuator (4) comprising at least:
- an electric motor (5),
- a reduction gear (36),
- a movement transmission system (6), the movement transmission system (6) comprising a threaded rod (19) and a nut (20), the threaded rod (19) being rotated by the electric motor (5) and the reduction gear (36), and the nut (20) being translated on the threaded rod (19), and
- a casing (7) comprising a first part (21) inside which the electric motor (5) is positioned, and a second part (22) inside which the movement transmission system (6) is positioned, the first and second parts (21, 22) of the casing (7) being assembled to one another so as to form a connection, the casing (7) having an exposed side corresponding to an outer side of the linear actuator (4), the outer side of the casing (7) being the upper side of the casing (7) in the assembled position of the linear actuator (4) relative to the concealing device (1),
**characterized in that** the linear actuator (4) further comprises:
- an element common to the first part (21) of the casing (7) and the second part (22) of the casing (7), the common elements being a covering element (46) covering the upper side of the second part (22) of the casing (7) and at least part of the upper side of the first part (21) of the casing (7), so as to hide the connection between the first and second parts (21, 22) of the casing (7), on the upper side of the casing (7).

2. The linear actuator (4) according to claim 1, **characterized in that** the second part (22) of the casing (7) comprises two side walls (9) and one transverse wall (8) extending between the two side walls (9), where the covering element (46) is made by the transverse wall (8) of the second part (22) of the casing (7).

3. The linear actuator (4) according to claim 2, **characterized in that** the transverse (8) and side (9) walls of the second part (22) of the casing (7) are assembled to one another by guide means (10), preferably making up guideway connections.

4. The linear actuator (4) according to claim 3, **characterized in that** the guide means (10) of the transverse (8) and side (9) walls of the second part (22) of the casing (7) comprise connecting elements forming ribs (10a) and grooves (10b) having conjugated profiles.

5. The linear actuator (4) according to claim 1, **characterized in that** the covering element (46) is made by a separate wall from the first and second parts (21, 22) of the casing (7).

6. The linear actuator (4) according to claim 5, **characterized in that** a transverse face (47) of the second part (22) of the casing (7) comprises a longitudinal recess (48).

7. The linear actuator (4) according to claim 5 or claim 6, **characterized in that** the covering element (46) and the second part (22) of the casing (7) are assembled to one another by guide means (10).

8. The linear actuator (4) according to claim 7, **characterized in that** the guide means (10) of the covering element (46) and the second part (22) of the casing (7) comprise connecting means forming ribs (10a) and grooves (10b) having conjugated profiles.

9. The linear actuator (4) according to any one of claims 1 to 8, **characterized in that** the covering element (46) comprises guide means (27) cooperating with guide means (12) of the first part (21) of the casing (7).

10. The linear actuator (4) according to claim 9, **characterized in that** the guide means (12, 27) of the covering element (46) and the first part (21) of the casing (7) are sliding connecting elements.

11. The linear actuator (4) according to any one of claims 1 to 10, **characterized in that** the second part (22) of the casing (7) is coupled to the first part (21) of the casing (7) using a junction element (14), the covering element (46) cooperating with guiding means (15) of the junction element (14).

12. The linear actuator (4) according to any one of claims 1 to 11, **characterized in that** one end of the second part (22) of the casing (7), opposite the first part (21) of the casing (7), is closed off by a stopper (16).

13. The linear actuator (4) according to claim 12, **characterized in that** the stopper (16) closing off the end of the second part (22) of the casing (7) supports a bearing (17) cooperating with the movement transmission system (6).

14. The linear actuator (4) according to any one of claims 1 to 13, **characterized in that** one end of the first part (21) of the casing (7), opposite the second part (22) of the casing (7), is closed off by an endpiece (23).

15. The linear actuator (4) according to any one of claims 1 to 14, **characterized in that** the covering element (46) has an exposed outer face with a uniform profile, and the covering element (46) preferably has a uniform section.

16. A concealing device (1) comprising at least one screen (3) able to be moved about an axis of rotation (25) and rotated by a linear actuator (4), **characterized in that** the concealing device (1) comprises a linear actuator (4) according to any one of claims 1 to 15.
